(19) Europäisches Patentamt
European Patent Office
Office européen des brevets

(11) **EP 4 753 321 A1**

(12) **EUROPEAN PATENT APPLICATION**
published in accordance with Art. 153(4) EPC

(43) Date of publication:
**03.06.2026 Bulletin 2026/23**

(21) Application number: **23946263.3**

(22) Date of filing: **27.07.2023**

(51) International Patent Classification (IPC):
*H04W 24/08* (2009.01)

(52) Cooperative Patent Classification (CPC):
**H04W 24/08**

(86) International application number:
**PCT/CN2023/109631**

(87) International publication number:
**WO 2025/020181 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LIN, Yanan
Dongguan, Guangdong 523860 (CN)**
• **XU, Jing
Dongguan, Guangdong 523860 (CN)**

(74) Representative: **Novagraaf Technologies
2 rue Sarah Bernhardt
CS90017
92665 Asnières-sur-Seine Cedex (FR)**

(54) **SENSING METHOD AND APPARATUS, PHYSICAL CHANNEL TRANSMISSION METHOD AND APPARATUS, DEVICE, AND MEDIUM**

(57)  The present application relates to the field of mobile communications, and discloses a sensing method and apparatus, a physical channel transmission method and apparatus, a device, and a medium. The method comprises: receiving first information transmitted in a first frequency domain resource in a first time domain unit and second information transmitted in a second frequency domain resource in a second time domain unit, wherein the first frequency domain resource comprises the second frequency domain resource; acquiring data information on the basis of the first information and the second information; and generating sensing information on the basis of the first information. The present application can take into account both sensing needs and data transmission efficiency, that is, there is no need to occupy, due to sensing needs, a large bandwidth in both the first time domain unit and the second time domain unit to transmit signals, but a large bandwidth is independently occupied in the first time domain unit used for sensing and only a small bandwidth is occupied in the second time domain unit used for data transmission.

Receiving first information on a first frequency-domain resource within a first time-domain unit and second information on a second frequency-domain resource within a second time-domain unit — 502

Acquiring data information based on the first information and the second information — 504

Generating sensing information based on the first information — 506

FIG. 5

EP 4 753 321 A1

**Description**

**TECHNICAL FIELD**

The present disclosure relates to the field of mobile communications, and in particular, to a sensing method and sensing apparatus, a method and apparatus for transmitting a physical channel, and a device and a medium thereof.

**RELATED ART**

Wireless communication and sensing are two important applications of modern radio frequency technologies. The sensing achieves target positioning, action recognition, imaging, and the like by sensing parameters of a physical environment using radio waves. Traditional sensing and wireless communication exist independently. This separated design leads to inefficiencies in the utilization of both wireless spectrum and hardware resources.
In the integrated sensing and communication technology, two functions of wireless communication and sensing are integrated, and thus functions of communication and sensing are simultaneously achieved using a same signal, such that the spectrum utilization is improved. For a specific implementation of the integrated sensing and communication, further researches are required.

**SUMMARY**

Embodiments of the present disclosure provide a sensing method and sensing apparatus, a method and apparatus for transmitting a physical channel, and a device and a medium thereof. The technical solutions are as follows.
According to some embodiments of the present disclosure, a sensing method is provided. The method is performed by a receiver device, and includes:

receiving first information on a first frequency-domain resource within a first time-domain unit and second information on a second frequency-domain resource within a second time-domain unit, wherein the first frequency-domain resource includes the second frequency-domain resource;
acquiring data information based on the first information and the second information; and generating sensing information based on the first information.

According to some embodiments of the present disclosure, a sensing method is provided. The method is performed by a transmitter device, and includes:

transmitting first information on a first frequency-domain resource within a first time-domain unit and second information transmitted on a second frequency-domain resource within a second time-domain unit, wherein the first frequency-domain resource includes the second frequency-domain resource;
wherein the first information and the second information are used to acquire data information, and the first information is used to generate sensing information.

According to some embodiments of the present disclosure, a method for transmitting a physical channel is provided. The method includes:

transmitting the physical channel via N time-domain units, wherein the N time-domain units include a first time-domain unit and a second time-domain unit;
wherein a first frequency-domain resource occupied by the physical channel within the first time-domain unit is greater than a second frequency-domain resource occupied by the physical channel within the second time-domain unit, and first information transmitted over the physical channel within the first time-domain unit is used for sensing.

According to some embodiments of the present disclosure, a sensing apparatus is provided. The apparatus includes:

a receiving module, configured to receive first information on a first frequency-domain resource within a first time-domain unit and second information transmitted on a second frequency-domain resource within a second time-domain unit, wherein the first frequency-domain resource includes the second frequency-domain resource;
an acquiring module, configured to acquire data information based on the first information and the second information;
and a generating module, configured to generate sensing information based on the first information.

According to some embodiments of the present disclosure, a sensing apparatus is provided. The apparatus includes:

a transmitting module, configured to transmit first information on a first frequency-domain resource within a first time-domain unit and second information on a second frequency-domain resource within a second time-domain unit, wherein the first frequency-domain resource includes the second frequency-domain resource; wherein the first information and the second information are used to acquire data information, and the first information is used to generate sensing information.

According to some embodiments of the present disclosure, an apparatus for transmitting a physical channel is provided. The apparatus includes:

a transmitting module, configured to transmit the physical channel via N time-domain units, the N time-domain units including a first time-domain unit and a second time-domain unit; wherein a first frequency-domain resource occupied by the physical channel within the first time-domain unit is greater than a second frequency-domain resource occupied by the physical channel within the second time-domain unit, and first information transmitted over the physical channel within the first time-domain unit is used for sensing.

According to some embodiments of the present disclosure, a terminal device is provided. The terminal device includes: a processor; a transceiver, connected to the processor; and a memory, configured to store one or more executable instructions of the processor; and wherein the terminal device is configured to load and execute the one or more executable instructions to perform the sensing method or the method for transmitting the physical channel described above.

According to some embodiments of the present disclosure, a network device is provided. The network device includes: a processor; a transceiver, connected to the processor; and a memory, configured to store one or more executable instructions of the processor; and wherein the network device is configured to load and execute the one or more executable instructions to perform the sensing method or the method for transmitting the physical channel described above.

According to some embodiments of the present disclosure, a computer-readable storage medium is provided. The computer-readable storage medium stores: one or more executable instructions, wherein the one or more executable instructions, when loaded and executed by a processor, cause the processor to perform the sensing method or the method for transmitting the physical channel described above.

According to some embodiments of the present disclosure, a chip is provided. The chip includes: programmable logic circuitry or one or more programs, wherein the chip, when running, is configured to perform the sensing method or the method for transmitting the physical channel described above.

According to some embodiments of the present disclosure, a computer program product is provided. The computer program product includes: one or more computer instructions stored in a computer-readable storage medium, wherein the one or more computer instructions, when read by a processor of a computer device from the computer-readable storage medium and executed by the processor, cause the computer device to perform the sensing method or the method for transmitting the physical channel described above.

The technical solutions according to the embodiments of the present disclosure have the following technical effects.

The first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission.

## BRIEF DESCRIPTION OF DRAWINGS

To describe the technical solutions according to the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 is a schematic diagram of a demodulation reference signal (DMRS) pattern according to some exemplary embodiments of the present disclosure;

FIG. 2 is a schematic diagram of a DMRS pattern according to some exemplary embodiments of the present disclosure;

FIG. 3 is a schematic diagram of a time-frequency resource according to some exemplary embodiments of the present disclosure;

FIG. 4 is a schematic diagram of a system architecture of a communication system according to some exemplary embodiments of the present disclosure;

FIG. 5 is a flowchart of a sensing method according to some exemplary embodiments of the present disclosure;

FIG. 6 is a flowchart of a sensing method according to some exemplary embodiments of the present disclosure;

FIG. 7 is a flowchart of a sensing method according to some exemplary embodiments of the present disclosure;

FIG. 8 is a schematic diagram of a time-frequency resource occupied by a first DMRS according to some exemplary embodiments of the present disclosure;

FIG. 9 is a schematic diagram of a time-frequency resource occupied by a first DMRS according to some exemplary embodiments of the present disclosure;

FIG. 10 is a flowchart of a sensing method according to some exemplary embodiments of the present disclosure;

FIG. 11 is a schematic diagram of time-frequency resources occupied by a second DMRS and a first reference signal according to some exemplary embodiments of the present disclosure;

FIG. 12 is a schematic diagram of time-frequency resources occupied by a second DMRS and a first reference signal according to some exemplary embodiments of the present disclosure;

FIG. 13 is a schematic diagram of time-frequency resources occupied by a second DMRS and a first reference signal according to some exemplary embodiments of the present disclosure;

FIG. 14 is a schematic diagram of time-frequency resources occupied by a second DMRS and a first reference signal according to some exemplary embodiments of the present disclosure;

FIG. 15 is a schematic diagram of time-frequency resources occupied by a second DMRS and a first reference signal according to some exemplary embodiments of the present disclosure;

FIG. 16 is a flowchart of a method for transmitting a physical channel according to some exemplary embodiments of the present disclosure;

FIG. 17 is a block diagram of a sensing apparatus according to some exemplary embodiments of the present disclosure;

FIG. 18 is a block diagram of a sensing apparatus according to some exemplary embodiments of the present disclosure;

FIG. 19 is a block diagram of an apparatus for transmitting a physical channel according to some exemplary embodiments of the present disclosure; and

FIG. 20 is a schematic structural diagram of a communication device according to some exemplary embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. Reference may be made in detail to the exemplary embodiments, examples of which are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with some aspects of the present disclosure, as detailed in the appended claims.

The terms used in the present disclosure are for the purpose of describing specific embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," and the like may be used herein to describe various pieces of information, and such information should not be limited to these terms. These terms are only used to distinguish one type of information from another. For example, a first parameter may also be referred to as a second parameter, and similarly, a second parameter is also referred to as a first parameter, without departing from the scope of the present disclosure. The word "if," as used herein, may be interpreted as "in a case where," " in a case when," or "in response to determining that," depending on the context.

Firstly, some terms involved in the embodiments of the present disclosure are described as follows.

**Introduction to integrated sensing and communication:**

Wireless communication and sensing are two important applications of modern radio frequency technologies. The sensing achieves target positioning, action recognition, imaging, and the like by sensing parameters of a physical environment using radio waves. Traditional sensing and wireless communication exist independently. This separated design leads to inefficiencies in the utilization of both wireless spectrum and hardware resources. In the Beyond 5-th generation (B5G) mobile communication technology and the 6-th generation (6G) mobile communication technology, the communication spectrum is expanding into millimeter-wave, terahertz, and visible light communication bands. Consequently, the spectrum for future wireless communications may be overlapped with the traditional spectrum used for sensing applications.

In the integrated sensing and communication technology, two functions of wireless communication and sensing are integrated, and thus functions of communication and sensing are simultaneously achieved using a same signal, such that the spectrum utilization is improved. Secondly, the wireless communication and wireless sensing have more and more similarities in system design, signal processing, data processing, and other aspects. Therefore, a same device is used to achieve the communication and sensing functions to reduce device costs.

The integrated sensing and communication roughly includes two categories, that is, communication-assisted sensing and sensing-assisted communication. The communication-assisted sensing refers to transmitting and aggregating sensing information via wireless communication, such that the breadth and depth of a sensing service are expanded, and the timeliness of the sensing service is improved. Based on the communication and sensing fusion technology, efficient sensing services such as high-accuracy positioning, high-resolution imaging, and virtual environment reconstruction are provided, and a digital twin environment is effectively constructed to achieve digital re-presentation and in-depth processing for a wide range of industries.

**Introduction to a DMRS of a new radio (NR) physical downlink shared channel (PDSCH)/physical uplink shared channel (PUSCH):**

Time-domain position:

PDSCH mapping type A: A advanced DMRS is transmitted on a second or third symbol within a slot, as specifically configured by a base station.

PDSCH mapping type B: The advanced DMRS is transmitted on a first time-domain symbol occupied by the PDSCH.

PUSCH mapping type A: A position of the advanced DMRS is configured by higher layer signaling.

PUSCH mapping type B: The advanced DMRS is transmitted on the first time-domain symbol occupied by the PUSCH.

Additional (extra) DMRS:

In a high-speed scenario, the base station configures additional DMRSs in the time domain to satisfy an estimation accuracy requirement for a time-varying nature of the signal. A number and positions of additional DMRSs are related to a number of symbols occupied by the PDSCH/PUSCH. Tables 1 to 2 show time-domain positions of additional DMRSs for the single-symbol pattern. $l_0$ represents the advanced DMRS.

Table 1

| Number of time-domain symbols allocated to PDSCH ($l_d$ in symbols) | DM-RS positions $\bar{l}$ | | | | | | | |
|---|---|---|---|---|---|---|---|---|
| | PDSCH mapping type A | | | | PDSCH mapping type B | | | |
| | dmrs-AdditionalPosition | | | | dmrs-AdditionalPosition | | | |
| | pos 0 | pos 1 | pos 2 | pos 3 | pos 0 | pos 1 | pos 2 | pos 3 |
| 2 | - | - | - | - | $l_0$ | $l_0$ | $l_0$ | $l_0$ |
| 3 | $l_0$ | $l_0$ | $l_0$ | $l_0$ | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0, 4$ | $l_0, 4$ | $l_0, 4$ |
| 6 | $l_0$ | $l_0$ | $l_0$ | $l_0$ | $l_0$ | $l_0$ | $l_0, 4$ | $l_0, 4$ |
| 7 | $l_0$ | $l_0$ | $l_0$ | $l_0$ | $l_0$ | $l_0$ | $l_0, 4$ | $l_0, 4$ |

(continued)

| Number of time-domain symbols allocated to PDSCH ($l_d$ in symbols) | DM-RS positions $\bar{l}$ | | | | | | | |
| --- | --- | --- | --- | --- | --- | --- | --- | --- |
| | PDSCH mapping type A | | | | PDSCH mapping type B | | | |
| | dmrs-AdditionalPosition | | | | dmrs-AdditionalPosition | | | |
| | pos 0 | pos 1 | pos 2 | pos 3 | pos 0 | pos 1 | pos 2 | pos 3 |
| 8 | $l_0$ | $l_0$,7 | $l_0$,7 | $l_0$,7 | $l_0$ | $l_0$, 6 | $l_0$, 3, 6 | $l_0$, 3, 6 |
| 9 | $l_0$ | $l_0$,7 | $l_0$,7 | $l_0$,7 | $l_0$ | $l_0$, 7 | $l_0$, 4, 7 | $l_0$, 4, 7 |
| 10 | $l_0$ | $l_0$,9 | $l_0$,6,9 | $l_0$,6,9 | $l_0$ | $l_0$, 7 | $l_0$, 4, 7 | $l_0$, 4, 7 |
| 11 | $l_0$ | $l_0$,9 | $l_0$,6,9 | $l_0$,6,9 | $l_0$ | $l_0$, 8 | $l_0$, 4, 8 | $l_0$, 3, 6 ,9 |
| 12 | $l_0$ | $l_0$,9 | $l_0$,6,9 | $l_0$,5,8,11 | $l_0$ | $l_0$, 9 | $l_0$, 5, 9 | $l_0$, 3, 6 ,9 |
| 13 | $l_0$ | $l_0$,$l_1$ | $l_0$,7,11 | $l_0$,5,8,11 | $l_0$ | $l_0$, 9 | $l_0$, 5, 9 | $l_0$, 3, 6 ,9 |
| 14 | $l_0$ | $l_0$,$l_1$ | $l_0$,7,11 | $l_0$,5,8,11 | - | - | - | - |

Table 2

| Number of time-domain symbols allocated to PUSCH ($l_d$ in symbols) | DM-RS positions $\bar{l}$ | | | | | | | |
| --- | --- | --- | --- | --- | --- | --- | --- | --- |
| | PUSCH mapping type A | | | | PUSCH mapping type B | | | |
| | dmrs-AdditionalPosition | | | | dmrs-AdditionalPosition | | | |
| | pos 0 | pos 1 | pos 2 | pos 3 | pos 0 | pos 1 | pos 2 | pos 3 |
| <4 | - | - | - | - | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0$,4 | $l_0$,4 | $l_0$,4 |
| 6 | $l_0$ | $l_0$ | $l_0$ | $l_0$ | $l_0$ | $l_0$,4 | $l_0$,4 | $l_0$,4 |
| 7 | $l_0$ | $l_0$ | $l_0$ | $l_0$ | $l_0$ | $l_0$,4 | $l_0$,4 | $l_0$,4 |
| 8 | $l_0$ | $l_0$,7 | $l_0$,7 | $l_0$,7 | $l_0$ | $l_0$,6 | $l_0$, 3, 6 | $l_0$, 3, 6 |
| 9 | $l_0$ | $l_0$,7 | $l_0$,7 | $l_0$,7 | $l_0$ | $l_0$,6 | $l_0$, 3, 6 | $l_0$, 3, 6 |
| 10 | $l_0$ | $l_0$,9 | $l_0$,6,9 | $l_0$,6,9 | $l_0$ | $l_0$,8 | $l_0$,4,8 | $l_0$,3,6,9 |
| 11 | $l_0$ | $l_0$,9 | $l_0$,6,9 | $l_0$,6,9 | $l_0$ | $l_0$,8 | $l_0$,4,8 | $l_0$,3,6,9 |
| 12 | $l_0$ | $l_0$,9 | $l_0$,6,9 | $l_0$,5,8,11 | $l_0$ | $l_0$,10 | $l_0$,5,10 | $l_0$,3,6,9 |
| 13 | $l_0$ | $l_0$,11 | $l_0$,7,11 | $l_0$,5,8,11 | $l_0$ | $l_0$,10 | $l_0$,5,10 | $l_0$,3,6,9 |
| 14 | $l_0$ | $l_0$,11 | $l_0$,7,11 | $l_0$,5,8,11 | $l_0$ | $l_0$,10 | $l_0$,5,10 | $l_0$,3,6,9 |

DMRS pattern:

The DMRS is transmitted only within the physical resource blocks allocated to the PDSCH/PUSCH.

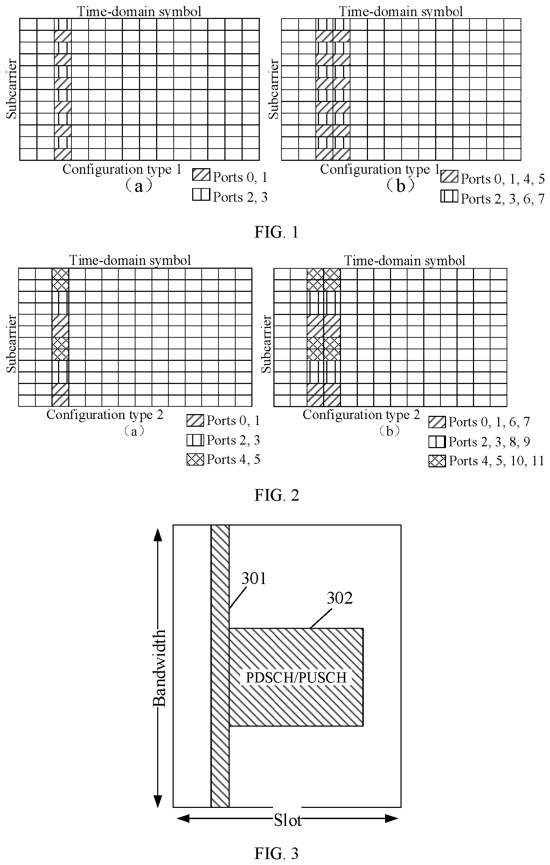

PDSCH DM-RS configuration type 1: FIG. 1 is a schematic diagram of a DMRS pattern according to some exemplary embodiments of the present disclosure. Using as an example of the advanced DMRS of PDSCH mapping type A, resource elements (REs) occupied by the DMRS for each antenna port are mapped with the frequency-domain spacing. As illustrated in FIG. 1(a), the single-symbol pattern supports a maximum of 4 antenna ports. As illustrated in FIG. 1(b), the double-symbol pattern supports a maximum of 8 antenna ports. Numbers in the figure represent serial numbers of the antenna ports.

PDSCH DM-RS configuration type 2: FIG. 2 is a schematic diagram of a DMRS pattern according to some exemplary embodiments of the present disclosure. Using as an example of the advanced DMRS of PDSCH mapping type A, as illustrated in FIG. 2(a), the single-symbol pattern supports a maximum of 3 groups of resources (corresponding to different color filling), and frequency-domain spreading is applied on two adjacent REs in each group of resources to support multiplexing of two antenna ports. As illustrated in FIG. 2(b), the double-symbol pattern supports a maximum of 12 antenna ports.

It should be noted that the pattern of the PUSCH DM-RS configuration type 1 is the same as that of the PDSCH DM-RS configuration type 1. The pattern of the PUSCH DM-RS configuration type 2 is the same as that of the PDSCH DM-RS configuration type 2.

DMRS sequence:

The DMRS sequence is generated based on the formula $r(n) = \frac{1}{\sqrt{2}}(1-2\cdot c(2n)) + j\frac{1}{\sqrt{2}}(1-2\cdot c(2n+1))$. $c(i)$ represents a pseudo-random sequence. n indicates that the sequence includes an index of a bit.

**Introduction to NR PDSCH/PUSCH:**

The base station allocates time-frequency resources for transmitting the PDSCH/PUSCH to the terminal device based on factors such as a transport block size (TBS), channel conditions, and transmission reliability requirements. In the case where the channel conditions are poor and the reliability requirements are stringent, the base station selects a low modulation and coding scheme (MCS) index (a lower MCS index indicates a lower code rate), and correspondingly occupies a larger amount of time-frequency resource data. Currently, the NR supports a plurality of MCS tables. Table 3 shows an MCS table.

Table 3

| MCS Index $I_{MCS}$ | Modulation Order $Q_m$ | Target code Rate R x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |

(continued)

| MCS Index $I_{MCS}$ | Modulation Order $Q_m$ | Target code Rate R x [1024] | Spectral efficiency |
|---|---|---|---|
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

A direct relationship between the TBS and the time-frequency resource is that a value of the TBS is related to $N_{info}$

$= N_{RE} \cdot R \cdot Q_m \cdot \upsilon$, $N_{RE} = \min\left(156, N_{RE}'\right) \cdot n_{PRB}$, $n_{PRB}$ represents a number of allocated physical resource blocks (PRBs) (that is, frequency-domain resources), $N_{RE}' = N_{sc}^{RB} \cdot N_{symb}^{sh} - N_{DMRS}^{PRB} - N_{oh}^{PRB}$, $N_{sc}^{RB} = 12$ represents a number of subcarriers, $N_{symb}^{sh}$ represents a number of time-domain symbols allocated for PDSCH/PUSCH transmission, $N_{DMRS}^{PRB}$ represents a number of REs occupied by the DMRS, $N_{oh}^{PRB}$ represents a parameter configured by higher layer signaling and a value of the parameter is 6, 12, or 18 (set to 0 in the absence of configuration by the higher layer signaling), R represents an indicated code rate, $Q_m$ represents an indicated modulation order, and $\upsilon$ represents a number of transmission layers.

The code rate supported by the NR system is limited. It can be seen from the above description that, the time-domain resources and the frequency-domain resources occupied by the PDSCH/PUSCH are not substantial even if a small amount of data is transmitted using the lowest code rate.

**Introduction to factors that affect sensing performance:**

The sensing accuracy is usually affected by a signal bandwidth and a signal duration. For example, a larger signal bandwidth leads to a higher accuracy in sensing distance measurement, and a longer signal duration leads to a higher accuracy in sensing speed measurement.

In the case of using communication signals for sensing, the resource allocated to the communication signals needs to satisfy two requirements simultaneously. That is, 1) communication requirements, including a data amount to be carried, transmission reliability, and a transmission delay; and 2) sensing requirements, different sensing services impose different demands on the signal transmission bandwidth and duration.

In the case where the base station schedules the PDSCH/PUSCH to occupy a large quantity of time-frequency resources (that is, a large bandwidth or a plurality of symbols) for transmission to satisfy the requirements of sensing for the time-frequency resources, a transmitter generates a large transport block (TB) for transmission by filling in redundant information (dummy bits) in the case where the amount of to-be-transmitted data is small, such that a system transmission efficiency is reduced, power consumption is wasted, and a transmission delay increases. However, in the case where the requirements of sensing for the time-frequency resources are not satisfied, a sensing performance is poor.

In the method according to the embodiments of the present disclosure, both a sensing performance and a communication system efficiency are considered in a mobile communication data transmission process. FIG. 3 is a schematic diagram of a time-frequency resource according to some exemplary embodiments of the present disclosure. As illustrated in FIG. 3, the communication device transmits first information in a first frequency-domain resource 301 within a first time-domain unit, and transmits second information 302 in a second frequency-domain resource within a second time-domain unit. The first frequency-domain resource 301 includes the second frequency-domain resource 302, and the first frequency-domain resource 301 is greater than the second frequency-domain resource 302. The first information and the second information are used for a receiver device to acquire data information, and the first information is used for the receiver device to generate sensing information. The transmission refers to transmitting and/or receiving, and the communication device includes a terminal device and/or a network device.

In some embodiments, the above method is applicable to transmission of a physical channel. Referring to FIG. 3, the communication device transmits a physical channel in the time domain (for example, one slot) via N time-domain units (for example, a time-domain symbol and an orthogonal frequency division multiplexing (OFDM) symbol). The N time-domain units include a first time-domain unit and a second time-domain unit. The first frequency-domain resource occupied by the physical channel within the first time-domain unit is greater than the second frequency-domain resource occupied by the physical channel within the second time-domain unit, and the first information transmitted over the physical channel within the first time-domain unit is used for sensing. Exemplarily, a first symbol (a time-domain symbol) occupied by the physical channel is transmitted using a large bandwidth, other symbols are transmitted using a small bandwidth, and the first symbol is also used for sensing.

In some embodiments, the physical channel includes at least one of a PDSCH, a PUSCH, a physical downlink control channel (PDCCH), or a physical uplink control channel (PUCCH).

The first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission.

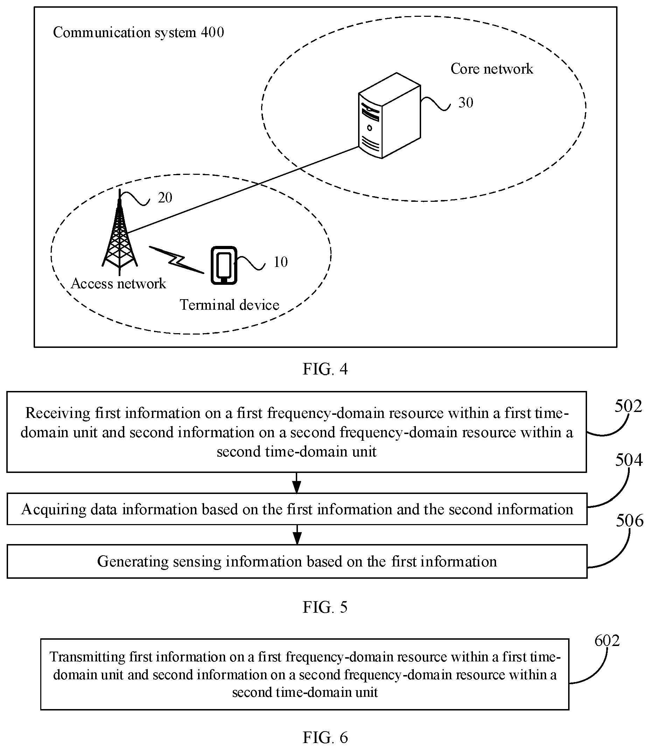

FIG. 4 illustrates a schematic diagram of a system architecture of a communication system 400 according to some exemplary embodiments of the present disclosure. The system architecture includes: a terminal device 10, an access network device 20, and a core network device 30.

The terminal device 10 refers to a user equipment (UE), an access terminal device, a subscriber unit, a subscriber station, a mobile station, a mobile terminal, a remote station, a remote terminal device, a mobile device, a wireless communication device, a user agent, or a user apparatus. In some embodiments, the terminal device is also a cellular phone, a cordless phone, a session initiation protocol (SIP) phone, a wireless local loop (WLL) station, personal digital assistant (PDA), a handheld device with wireless communication function, a computing device, or other processing device connected to a wireless modem, a vehicle-mounted device, a wearable device, a terminal device in a 5th generation system (5GS), or a terminal device in a public land mobile network (PLMN) evolved in the future, or the like, which is not limited in the embodiments of the present disclosure. For convenience of description, the devices described above are collectively referred to as the terminal device.

It should be noted that a plurality of terminal devices 10 are usually disposed, and one or more terminal devices 10 may be distributed in a cell managed by each access network device 20. In addition, one or more terminal devices 10 may also be distributed outside the cell managed by the access network device 20. Different terminal devices 10 may communicate with each other over a sidelink.

The access network device 20 is a device deployed in an access network to provide a wireless communication function for the terminal device 10. The access network device 20 may include various forms of macro base stations, micro base stations, relay stations, access points, and the like. In systems using different radio access technologies, a device with the functionality of an access network device may have different names. For example, the device is referred to as gNodeB or gNB in the 5G NR system. As communication technologies evolve, the name "access network device" may change. For convenience of description, in the embodiments of the present disclosure, the above apparatuses for providing the terminal devices 10 with the wireless communication functionality are collectively referred to as access network devices. In some embodiments, a communication relationship is established between the terminal device 10 and the core network device 30 through the access network device 20. Exemplarily, in a long-term evolution (LTE) system, the access network device 20 is an evolved universal terrestrial radio access network (EUTRAN) or one or more eNodeBs in EUTRAN; and in a 5G NR system, the access network device 20 is a radio access network (RAN) or one or more gNBs in the RAN.

The core network devices 30 mainly function to provide user connection, user management, and service bearing, and serve as a bearer network to provide an interface to an external network. For example, the core network device in the 5G NR system includes an access and mobility management function (AMF) entity, a user plane function (UPF) entity, a session management function (SMF) entity, and the like. The access network device 20 and the core network device 30 are collectively referred to as a network device.

In one example, the access network devices 20 and the core network devices 30 communicate with each other over an air technology, such as an NG interface in the 5G NR system. The access network devices 20 and the terminal devices 10 communicate with each other over an air technology, such as a Uu interface. The terminal devices 10 and the terminal devices 10 communicate with each other over an air technology, such as a PC5 interface.

FIG. 5 is a flowchart of a sensing method according to some exemplary embodiments of the present disclosure. The method is performed by a receiver device, and the receiver device includes a terminal device and/or a network device. The method includes the following processes.

**In S502,** first information on a first frequency-domain resource within a first time-domain unit and second information on a second frequency-domain resource within a second time-domain unit are received.

The first frequency-domain resource includes the second frequency-domain resource, the first frequency-domain resource is greater than the second frequency-domain resource, and a quantity of frequency-domain units occupied by the first frequency-domain resource is greater than a quantity of frequency-domain units occupied by the second frequency-domain resource. In some embodiments, the frequency-domain unit refers to an RE or a subcarrier.

In some embodiments, both a start position and an end position of the second frequency-domain resource in the frequency domain are within the first frequency-domain resource. In some embodiments, a frequency-domain start position of the second frequency-domain resource is the same as a frequency-domain start position of the first frequency-domain resource, and a frequency-domain end position of the second frequency-domain resource is within the first frequency-domain resource. In some embodiments, the frequency-domain end position of the second frequency-domain resource is the same as the frequency-domain end position of the first frequency-domain resource, and the frequency-domain start position of the second frequency-domain resource is within the first frequency-domain resource.

In some embodiments, the first time-domain unit includes at least one of a slot, a time-domain symbol, or an OFDM symbol, and the second time-domain unit includes at least one of a slot, a time-domain symbol, or an OFDM symbol.

The first information and the second information are used for the receiver device to acquire data information. The first information is used for the receiver device to generate sensing information, such that sensing is performed based on the sensing information.

In some embodiments, the first time-domain unit is the time-domain unit occupied by the DMRS. For example, in the case where the first time-domain unit includes a single time-domain unit, the first time-domain unit is a first symbol occupied by the DMRS, or a symbol indicated by the network device in symbols occupied by the DMRS through configuration signaling, or a symbol indicated by a predetermined rule in symbols occupied by the DMRS. Alternatively, in the case where the first time-domain unit includes a plurality of time-domain units, the first time-domain unit is first M symbols occupied by the DMRS, wherein M is a positive integer greater than 1, or a plurality of symbols indicated by the network device in symbols occupied by the DMRS through configuration signaling, or a plurality of symbols indicated by a predetermined rule in symbols occupied by the DMRS.

Because the first time-domain symbol occupied by the DMRS exists all the time, the above solution is applicable to all scenarios, such that the implementation complexity of the network device and the terminal device is simplified. In the case where the network device schedules the first time-domain unit, the network device determines the position of the first time-domain unit based on a specific scheduling status to avoid scattered resources in a system. Therefore, the system efficiency is improved.

In some embodiments, the first information includes a DMRS, and the DMRS is used to demodulate information on the first frequency-domain resource and/or the second frequency-domain resource. In some embodiments, the DMRS is further used for the receiver device to generate sensing information.

In some embodiments, the first information further includes at least one of:

- partial data information;
- partial TB information; or
- a first reference signal.

The first reference signal is used to generate sensing information. In some embodiments, the first reference signal is the DMRS. In some embodiments, the first reference signal is different from the DMRS, and is a reference signal other than the DMRS.

In some embodiments, the second information includes at least one of:

- data information;
- partial data information;
- TB information; or
- partial TB information.

In some embodiments, all or part of the data information is mapped to frequency-domain resources that are not occupied by the DMRS in the second frequency-domain resource within the first time-domain unit. Since the data is transmitted only over a small second frequency-domain resource, a transmission mechanism (a transmission mechanism of a physical channel) in some practices, such as a TBS determination manner, is reused to the greatest extent.

In some embodiments, all or part of the data information is mapped to frequency-domain resources that are not occupied by the reference signal in the first frequency-domain resource within the first time-domain unit. Because data within different time-domain units occupies different frequency-domain resources, scattered resources are avoided, and the system efficiency is improved.

In some embodiments, the first time-domain unit and the first frequency-domain resource are indicated by a network device. In some embodiments, the network device indicates the first frequency-domain resource via higher layer signaling or dynamic signaling. In some embodiments, the network device transmits signaling to configure the first frequency-domain resource in the physical channel used for sensing. The network device configures the first frequency-domain resource, such that the first frequency-domain resource is properly configured based on accuracy requirements of a sensing service.

In some embodiments, configuration signaling for configuring the first frequency-domain resource includes at least one of:

- a frequency-domain resource start point of the first frequency-domain resource;
- a quantity of frequency-domain resources of the first frequency-domain resource;
- a frequency-domain resource end point of the first frequency-domain resource; or
- a frequency-domain resource spacing of the first frequency-domain resource.

In some embodiments, the frequency-domain resource includes at least one of a resource block (RB), a subcarrier, or an RE.

In some embodiments, in the case where the configuration information includes the frequency-domain resource start point, the first frequency-domain resource is determined based on the frequency-domain resource start point and at least one of the frequency-domain resource end point of the first time-domain unit, a predetermined frequency-domain resource end point, or a predetermined quantity of frequency-domain resources. In some embodiments, in the case where the configuration information includes the frequency-domain resource end point, the first frequency-domain resource is determined based on the frequency-domain resource end point and at least one of the frequency-domain resource start point of the first time-domain unit, a predetermined frequency-domain resource start point, or a predetermined quantity of frequency-domain resources. In some embodiments, in the case where the configuration information includes the quantity of frequency-domain resources, the first frequency-domain resource is determined based on the quantity of frequency-domain resources and at least one of the frequency-domain resource start point of the first time-domain unit, the frequency-domain resource end point of the first time-domain unit, the predetermined frequency-domain resource start point, or the predetermined frequency-domain resource end point. In some embodiments, in the case where the configuration information includes the frequency-domain resource spacing, the first frequency-domain resource is determined based on the frequency-domain resource spacing and at least one of the frequency-domain resource of the first time-domain unit, the predetermined quantity of frequency-domain resources, the frequency-domain resource start point of the first time-domain unit, the frequency-domain resource end point of the first time-domain unit, the predetermined frequency-domain resource start point, or the predetermined frequency-domain resource end point. In some embodiments, in the case where the configuration information includes a plurality of pieces of information in the configuration information, the first frequency-domain resource is determined with reference to the above content.

It should be noted that the frequency-domain resource is equivalent to/replaceable with a physical resource.

In some embodiments, the second frequency-domain resource is configured by the network device.

In some embodiments, a first spreading factor corresponding to the first time-domain unit and a second spreading factor corresponding to the second time-domain unit are independently set. The first spreading factor is configured to spread information transmitted within the first time-domain unit, and the second spreading factor is configured to spread information transmitted within the second time-domain unit. In some embodiments, spreading the information transmitted within the first time-domain unit refers to frequency-domain spreading, such that the multi-user multiplexing efficiency is improved. For example, a plurality of terminals occupy the same first time-domain symbol and the same first frequency-domain resource, and code division multiplexing (CDM) is achieved using different spreading sequences. In some embodiments, spreading the information transmitted within the second time-domain unit refers to frequency-domain spreading, such that the multi-user multiplexing efficiency is improved. In some embodiments, the spreading factor or a spreading sequence identifier (for example, an index) is indicated by the network device. In some embodiments, the spreading sequence identifier is determined based on terminal-specific information (for example, a terminal identifier (UE ID)).

In some embodiments, the first spreading factor is greater than the second spreading factor. That is, the spreading factor in the first time-domain unit is large, and the spreading factor in the second time-domain unit is small. The second time-domain unit multiplexes a plurality of users in a frequency-division multiplexing (FDM) manner. Therefore, the quantity of users multiplexed through spreading is appropriately reduced.

**For the** case **of sensing through the first DMRS:**

In some embodiments, the DMRS in the first information includes a first DMRS, and the first DMRS is mapped to the first frequency-domain resource within the first time-domain unit for transmission. In some embodiments, the first DMRS is mapped to the entire first frequency-domain resource for transmission. In some embodiments, the first DMRS is mapped to the second frequency-domain resource and a third frequency-domain resource within the first time-domain unit for transmission, and the third frequency-domain resource is a portion of the first frequency-domain resource that is not overlapped with the second frequency-domain resource.

In some embodiments, a sequence corresponding to the first DMRS is generated based on a size of the first frequency-domain resource. With reference to the formula for generating the DMRS sequence, in the case where the size of the frequency-domain resource used to generate the first DMRS is larger, n is larger. For frequency-domain resources of different sizes, the generated sequences corresponding to the first DMRS are different.

In some embodiments, the first DMRS is used to demodulate information on the first frequency-domain resource and/or the second frequency-domain resource. The first DMRS is further used for sensing, and the receiver device generates sensing information based on the first DMRS.

**For the case of sensing through the second DMRS and the first reference signal:**

In some embodiments, the DMRS in the first information includes a second DMRS, and the second DMRS is mapped to the second frequency-domain resource within the first time-domain unit for transmission.

In some embodiments, a sequence corresponding to the second DMRS is generated based on a size of the second frequency-domain resource. With reference to the formula for generating the DMRS sequence, in the case where the size of the frequency-domain resource used to generate the second DMRS is larger, n is larger. For frequency-domain resources of different sizes, the generated sequences corresponding to the second DMRS are different.

In some embodiments, the second DMRS is used to demodulate information on the first frequency-domain resource and/or the second frequency-domain resource. In some embodiments, the second DMRS is further used for sensing.

In some embodiments, the first information includes a first reference signal, and the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource.

In some embodiments, a sequence corresponding to the first reference signal is generated based on a size of the third frequency-domain resource. With reference to the formula for generating the DMRS sequence, in the case where the size of the frequency-domain resource used to generate the first reference signal is larger, n is larger. For frequency-domain resources of different sizes, the generated sequences corresponding to the first reference signal are different.

The first reference signal is used to generate the sensing information. In some embodiments, the first reference signal is a DMRS. In some embodiments, the first reference signal is different from the DMRS, and is a reference signal other than the DMRS. In some embodiments, the first reference signal is further used to demodulate information on the first frequency-domain resource and/or the second frequency-domain resource.

In some embodiments, the second DMRS includes DMRSs corresponding to A ports, and the first reference signal includes DMRSs corresponding to some of the A ports. That is, the DMRSs corresponding to the A ports are transmitted within a range of the second frequency-domain resource within the first time-domain unit, and the DMRSs corresponding to some of the A ports are transmitted within a range of other frequency-domain resources than the second frequency-domain resource within the first frequency-domain resource. A is a positive integer.

In some embodiments, the third frequency-domain resource includes: a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources. With reference to the formula for generating the DMRS sequence, different sequences corresponding to the first reference signal are generated for frequency-domain resources of different sizes.

In some embodiments, the receiver device generates the sensing information based on the second DMRS and the first reference signal.

In some embodiments, the frequency-domain spacing between physical resources occupied by the first reference signal is greater than the frequency-domain spacing between physical resources occupied by the second DMRS. Alternatively, a frequency-domain density of the first reference signal is less than a frequency-domain density of the second DMRS.

**In S504,** data information is acquired based on the first information and the second information.

In some embodiments, the receiver device demodulates the information on the first frequency-domain resource and/or the second frequency-domain resource using the DMRS in the first information, such that the data information is acquired based on the first information and the second information. The data information is information transmitted by a transmitter device to a receiver device. For example, the information demodulated using the DMRS includes information carried by frequency-domain resources other than frequency-domain resources carrying reference signals, specifically excluding the first frequency-domain resource and/or the second frequency-domain resource.

**In S506,** the sensing information is generated based on the first information.

In some embodiments, the sensing information is used to sense a target and/or an environment. The receiver device acquires detection information (sensing information) based on the information within the first time-domain unit. The detection information is used to identify a target or a measurement environment, for example, a measurement distance, a delay, an angle, a movement speed, and a phase. In some embodiments, the receiver device reports the detection information.

It should be noted that in a downlink scenario, a receiver device is a terminal device, and a transmitter device is a network device. In an uplink scenario, a receiver device is a network device, and a transmitter device is a terminal device. The method according to the embodiments of the present disclosure is applicable to transmission of a physical channel. In an uplink scenario, the physical channel includes a PUSCH and/or a PUCCH. In a downlink scenario, the physical channel includes a PDSCH and/or a PDCCH.

It should be noted that the sensing in the embodiments of the present disclosure specifically refers to (be equivalent to/replaceable with) positioning, ranging, speed measurement, angle measurement, target imaging, target detection, target tracking, target identification, and the like.

In summary, in the method according to the embodiments, the first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission..

FIG. 6 is a flowchart of a sensing method according to some exemplary embodiments of the present disclosure. The method is performed by a transmitter device, and the transmitter device includes a terminal device and/or a network device. The method includes the following process.

**In S602,** first information on a first frequency-domain resource within a first time-domain unit and second information on a second frequency-domain resource within a second time-domain unit are transmitted.

The first frequency-domain resource includes the second frequency-domain resource, the first frequency-domain resource is greater than the second frequency-domain resource, and a quantity of frequency-domain units occupied by the first frequency-domain resource is greater than a quantity of frequency-domain units occupied by the second frequency-domain resource. In some embodiments, the frequency-domain unit refers to an RE or a subcarrier.

In some embodiments, the first time-domain unit includes at least one of a slot, a time-domain symbol, or an OFDM symbol, and the second time-domain unit includes at least one of a slot, a time-domain symbol, or an OFDM symbol.

The first information and the second information are used for the receiver device to acquire data information. The first information is used for the receiver device to generate sensing information, such that sensing is performed based on the sensing information.

In some embodiments, the first time-domain unit is the time-domain unit occupied by the DMRS. In some embodiments, the first time-domain unit is a first symbol occupied by the DMRS, or the first time-domain unit is first M symbols occupied by the DMRS.

In some embodiments, the first information includes a DMRS, and the DMRS is used to demodulate information on the first frequency-domain resource and/or the second frequency-domain resource. In some embodiments, the DMRS is further used for the receiver device to generate sensing information.

In some embodiments, the first information further includes at least one of:

- partial data information;
- partial TB information; or
- a first reference signal.

The first reference signal is used to generate sensing information. In some embodiments, the first reference signal is the DMRS. In some embodiments, the first reference signal is different from the DMRS, and is a reference signal other than the DMRS.

In some embodiments, the second information includes at least one of:

- data information;
- partial data information;
- TB information; or

- partial TB information.

In some embodiments, all or part of the data information is mapped to frequency-domain resources that are not occupied by the DMRS in the second frequency-domain resource within the first time-domain unit. In some embodiments, all or part of the data information is mapped to frequency-domain resources that are not occupied by the reference signal in the first frequency-domain resource within the first time-domain unit.

In some embodiments, the first time-domain unit and the first frequency-domain resource are indicated by a network device. In some embodiments, configuration signaling for configuring the first frequency-domain resource includes at least one of:

- a frequency-domain resource start point of the first frequency-domain resource;
- a quantity of frequency-domain resources of the first frequency-domain resource;
- a frequency-domain resource end point of the first frequency-domain resource; or
- a frequency-domain resource spacing of the first frequency-domain resource.

In some embodiments, the frequency-domain resource includes at least one of an RB, a subcarrier, or an RE.

It should be noted that the frequency-domain resource is equivalent to/replaceable with a physical resource.

In some embodiments, the second frequency-domain resource is configured by the network device.

In some embodiments, a first spreading factor corresponding to the first time-domain unit and a second spreading factor corresponding to the second time-domain unit are independently set. In some embodiments, spreading the information transmitted within the first time-domain unit is frequency-domain spreading. In some embodiments, spreading the information transmitted within the second time-domain unit is frequency-domain spreading. In some embodiments, the first spreading factor is greater than the second spreading factor.

**For the case of sensing through the first DMRS:**

In some embodiments, the DMRS in the first information includes a first DMRS, and the first DMRS is mapped to the first frequency-domain resource within the first time-domain unit for transmission. In some embodiments, the first DMRS is mapped to the entire first frequency-domain resource for transmission. In some embodiments, the first DMRS is mapped to the second frequency-domain resource and a third frequency-domain resource within the first time-domain unit for transmission, and the third frequency-domain resource is a portion of the first frequency-domain resource that is not overlapped with the second frequency-domain resource.

In some embodiments, a sequence corresponding to the first DMRS is generated based on a size of the first frequency-domain resource. With reference to the formula for generating the DMRS sequence, in the case where the size of the frequency-domain resource used to generate the reference signal is larger, n is larger. For frequency-domain resources of different sizes, the generated sequences corresponding to the reference signal are different.

In some embodiments, the first DMRS is used to demodulate information on the first frequency-domain resource and/or the second frequency-domain resource. The first DMRS is further used for sensing, and the receiver device generates sensing information based on the first DMRS.

**For the case of sensing through the second DMRS and the first reference signal:**

In some embodiments, the DMRS in the first information includes a second DMRS, and the second DMRS is mapped to the second frequency-domain resource within the first time-domain unit for transmission.

In some embodiments, a sequence corresponding to the second DMRS is generated based on a size of the second frequency-domain resource. With reference to the formula for generating the DMRS sequence, in the case where the size of the frequency-domain resource used to generate the reference signal is larger, n is larger. For frequency-domain resources of different sizes, the generated sequences corresponding to the reference signal are different.

In some embodiments, the second DMRS is used to demodulate information on the first frequency-domain resource and/or the second frequency-domain resource. In some embodiments, the second DMRS is further used for sensing.

In some embodiments, the first information includes a first reference signal, and the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource.

In some embodiments, a sequence corresponding to the first reference signal is generated based on a size of the third frequency-domain resource. With reference to the formula for generating the DMRS sequence, in the case where the size of the frequency-domain resource used to generate the reference signal is larger, n is larger. For frequency-domain resources of different sizes, the generated sequences corresponding to the reference signal are different.

The first reference signal is used to generate the sensing information. In some embodiments, the first reference signal is a DMRS. In some embodiments, the first reference signal is different from the DMRS, and is a reference signal other than the DMRS. In some embodiments, the first reference signal is further used to demodulate information on the first frequency-domain resource and/or the second frequency-domain resource.

In some embodiments, the second DMRS includes DMRSs corresponding to A ports, and the first reference signal includes DMRSs corresponding to some of the A ports. A is a positive integer.

In some embodiments, the third frequency-domain resource includes a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources. For frequency-domain resources of different sizes, the generated sequences corresponding to the reference signal are different.

In some embodiments, the receiver device generates the sensing information based on the second DMRS and the first reference signal.

In some embodiments, the frequency-domain spacing between physical resources occupied by the first reference signal is greater than the frequency-domain spacing between physical resources occupied by the second DMRS. Alternatively, a frequency-domain density of the first reference signal is less than a frequency-domain density of the second DMRS.

In some embodiments, the sensing information is used to sense a target and/or an environment.

The transmitter device is a network device, and the receiver device is a terminal device. Alternatively, the transmitter device is a terminal device, and the receiver device is a network device. The method according to the embodiments of the present disclosure is applicable to transmission of a physical channel. The physical channel includes at least one of a PUSCH, a PUCCH, a PDSCH, or a PDCCH.

It should be noted that the sensing in the embodiments of the present disclosure specifically refers to (be equivalent to/replaceable with) positioning, ranging, speed measurement, angle measurement, target imaging, target detection, target tracking, target identification, and the like.

In summary, in the method according to the embodiments, the first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission.

According to the method according to the embodiments of the present disclosure, the first time-domain unit occupies a large bandwidth for data transmission and sensing, and the second time-domain unit occupies a small bandwidth for data transmission, such that both the sensing requirements and the data transmission efficiency are considered. The sensing is implemented in the following two cases:

1) sensing is implemented through the first DMRS; and
2) sensing is implemented through the second DMRS and the first reference signal.

For the first case described above:

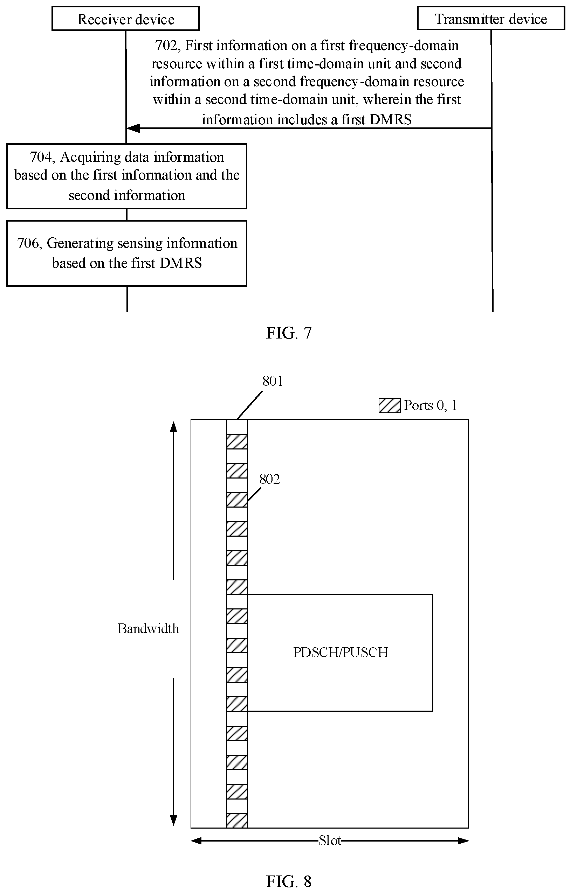

FIG. 7 is a flowchart of a sensing method according to some exemplary embodiments of the present disclosure. The method is applicable to the system illustrated in FIG. 4. The method includes the following processes.

**In** S702, a transmitter device transmits first information on a first frequency-domain resource within a first time-domain unit and second information on a second frequency-domain resource within a second time-domain unit to a receiver device, wherein the first information includes a first DMRS.

The first frequency-domain resource includes the second frequency-domain resource, the first frequency-domain resource is greater than the second frequency-domain resource, and the quantity of frequency-domain units occupied by the first frequency-domain resource is greater than a quantity of frequency-domain units occupied by the second frequency-domain resource. In some embodiments, the frequency-domain unit refers to an RE or a subcarrier.

In some embodiments, both the start position and the end position of the second frequency-domain resource in the frequency domain are within the first frequency-domain resource. In some embodiments, a frequency-domain start position of the second frequency-domain resource is the same as a frequency-domain start position of the first frequency-domain resource, and a frequency-domain end position of the second frequency-domain resource is within the first frequency-domain resource. In some embodiments, the frequency-domain end position of the second frequency-domain resource is the same as that of the first frequency-domain resource, but the frequency-domain start position of the second frequency-domain resource is within the first frequency-domain resource.

In some embodiments, the first time-domain unit includes at least one of a slot, a time-domain symbol, or an OFDM symbol, and the second time-domain unit includes at least one of a slot, a time-domain symbol, or an OFDM symbol.

In some embodiments, the first time-domain unit is the time-domain unit occupied by the DMRS. For example, in the case where the first time-domain unit includes a single time-domain unit, the first time-domain unit is the first symbol occupied by the DMRS, or a symbol indicated by the network device in the symbols occupied by the DMRS through configuration signaling, or a symbol indicated by a predetermined rule in the symbols occupied by the DMRS. Alternatively, in the case where the first time-domain unit includes a plurality of time-domain units, the first time-domain unit is the first M symbols occupied by the DMRS, wherein M is a positive integer greater than 1, or a plurality of symbols indicated by the network device in the symbols occupied by the DMRS through configuration signaling, or a plurality of symbols indicated by a predetermined rule in the symbols occupied by the DMRS.

The first DMRS is mapped to the first frequency-domain resource within the first time-domain unit for transmission. In some embodiments, the first DMRS is mapped to the entire first frequency-domain resource for transmission. In some embodiments, the first DMRS is mapped to the second frequency-domain resource and a third frequency-domain resource within the first time-domain unit for transmission, and the third frequency-domain resource is a portion of the first frequency-domain resource that is not overlapped with the second frequency-domain resource. In some embodiments, the sequence corresponding to the first DMRS is generated based on the size of the first frequency-domain resource. In some embodiments, the first DMRS is used to demodulate information on the first frequency-domain resource and/or the second frequency-domain resource. The first DMRS is further used for sensing, and the receiver device generates sensing information based on the first DMRS.

Using an example where the method according to the embodiments of the present disclosure is applicable to transmission of a physical channel, FIG. 8 is a schematic diagram of a time-frequency resource occupied by a first DMRS according to some exemplary embodiments of the present disclosure. As illustrated in FIG. 8, in the case of two ports, the transmitter device transmits a first DMRS 802 within a range of the first frequency-domain resource 801 occupied within the first time-domain unit according to an NR DMRS rule (including a DMRS sequence generation rule and a DMRS pattern). Each first DMRS 802 occupies an RE, and corresponds to ports 0 and 1. It should be noted that the DMRS in FIG. 8 and the subsequent accompanying drawings is merely used to illustratively represent the spacing distribution feature, and the quantity of DMRSs and the bandwidth occupied by the PDSCH/PUSCH do not strictly comply with a rule that an RB includes 12 REs.

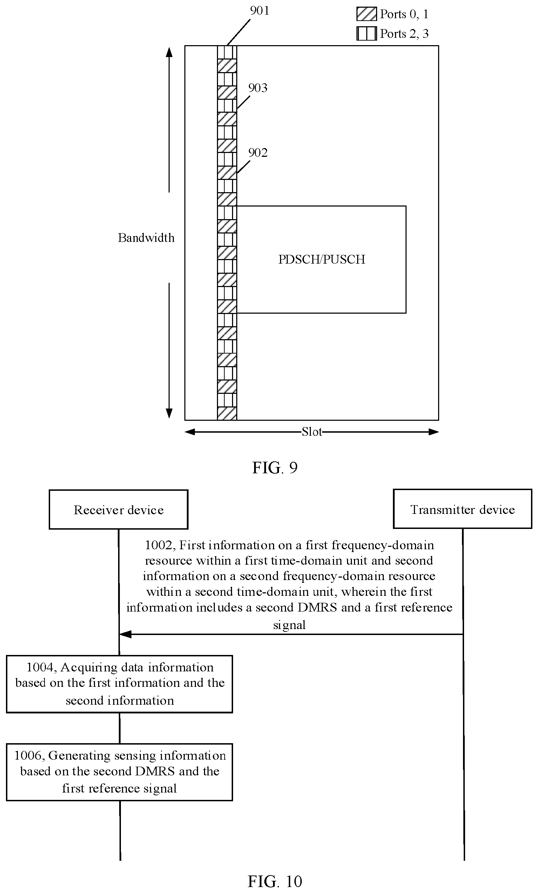

FIG. 9 is a schematic diagram of a time-frequency resource occupied by a first DMRS according to some exemplary embodiments of the present disclosure. As illustrated in FIG. 9, in the case of four ports, the transmitter device transmits a first DMRS 902 and a first DMRS 903 within a range of the first frequency-domain resource 901 occupied within the first time-domain unit according to an NR DMRS rule (including a DMRS sequence generation rule and a DMRS pattern). Each first DMRS 902 and each first DMRS 903 occupy an RE. The first DMRS 902 corresponds to ports 0 and 1, and the first DMRS 903 corresponds to ports 2 and 3.

In some embodiments, the first information further includes at least one of:

- partial data information; or
- partial TB information.

In some embodiments, the second information includes at least one of:

- data information;
- partial data information;
- TB information; or
- partial TB information.

In some embodiments, all or part of the data information is mapped to frequency-domain resources that are not occupied by the DMRS in the second frequency-domain resource within the first time-domain unit. In some embodiments, all or part of the data information is mapped to frequency-domain resources that are not occupied by the reference signal in the first frequency-domain resource within the first time-domain unit.

In some embodiments, the first time-domain unit and the first frequency-domain resource are indicated by a network device. In some embodiments, the network device indicates the first frequency-domain resource via higher layer signaling or dynamic signaling. In some embodiments, the network device transmits signaling to configure the first frequency-domain resource in the physical channel used for sensing.

In some embodiments, configuration signaling for configuring the first frequency-domain resource includes at least one of:

- a frequency-domain resource start point of the first frequency-domain resource;
- a quantity of frequency-domain resources of the first frequency-domain resource;
- a frequency-domain resource end point of the first frequency-domain resource; or
- a frequency-domain resource spacing of the first frequency-domain resource.

In some embodiments, the frequency-domain resource includes at least one of an RB, a subcarrier, or an RE.

It should be noted that the frequency-domain resource is equivalent to/replaceable with a physical resource.

In some embodiments, the second frequency-domain resource is configured by the network device.

In some embodiments, a first spreading factor corresponding to the first time-domain unit and a second spreading factor corresponding to the second time-domain unit are independently set. In some embodiments, spreading the information transmitted within the first time-domain unit refers to frequency-domain spreading, such that the multi-user multiplexing efficiency is improved. In some embodiments, spreading the information transmitted within the second time-domain unit refers to frequency-domain spreading, such that the multi-user multiplexing efficiency is improved.

In some embodiments, the first spreading factor is greater than the second spreading factor.

**In S704,** the receiver device acquires the data information based on the first information and the second information.

In some embodiments, the receiver device demodulates the information on the first frequency-domain resource and/or the second frequency-domain resource using the first DMRS in the first information, such that the data information is acquired based on the first information and the second information. The data information is information transmitted by a transmitter device to a receiver device. For example, the information demodulated using the first DMRS includes information carried by frequency-domain resources other than those carrying reference signals, specifically excluding the first frequency-domain resource and/or the second frequency-domain resource.

**In S706,** the receiver device generates sensing information based on the first DMRS.

In some embodiments, the sensing information is used to sense a target and/or an environment. The receiver device acquires detection information (sensing information) based on the first DMRS within the first time-domain unit. The detection information is used to identify a target or a measurement environment, for example, a measurement distance, a delay, an angle, a movement speed, and a phase. In some embodiments, the receiver device reports the detection information.

It should be noted that in a downlink scenario, a receiver device is a terminal device, and a transmitter device is a network device. In an uplink scenario, a receiver device is a network device, and a transmitter device is a terminal device. The method according to the embodiments of the present disclosure is applicable to transmission of a physical channel. In an uplink scenario, the physical channel includes a PUSCH and/or a PUCCH. In a downlink scenario, the physical channel includes a PDSCH and/or a PDCCH.

It should be noted that the sensing in the embodiments of the present disclosure specifically refers to (be equivalent to/replaceable with) positioning, ranging, speed measurement, angle measurement, target imaging, target detection, target tracking, target identification, and the like.

In the embodiments of the present disclosure, S704 and S706 are optional. In different embodiments, one or more of these processes may be omitted or replaced. S704 and S706 are performed in a different order or simultaneously. S702 and S704 are performed as independent embodiments, S702 and S706 are performed as independent embodiments, which is not limited.

S702 may be performed as an independent embodiment, for example, separately performed as a method for transmitting information performed by a terminal device or a network device, or separately performed as a method for receiving information performed by a terminal device or a network device; S702 and S704 may be performed as independent embodiments, for example, separately performed as a method for acquiring data information; and S702 and S706 are performed as independent embodiments, for example, separately performed as a sensing method.

In summary, in the method according to the embodiments, the first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission.

In the method according to the embodiments of the present disclosure, the first time-domain unit is the time-domain symbol occupied by the first DMRS. Because the first time-domain symbol occupied by the DMRS exists all the time, the above solution is applicable to all scenarios, such that the implementation complexity of the network device and the terminal device is simplified. In the case where the network device schedules the first time-domain unit, the network device determines the position of the first time-domain unit based on a specific scheduling status to avoid scattered resources in a system. Therefore, the system efficiency is improved.

In the method provided in the embodiments of the present disclosure, since the data is transmitted only over a small second frequency-domain resource, a transmission mechanism in some practices, such as a TBS determination manner, is reused to the greatest extent. In addition, the data occupies the first frequency domain resource. Because data within different time-domain units occupies different frequency domain resources, scattered resources are avoided, and the system efficiency is improved.

In the method according to the embodiments of the present disclosure, the network device further configures the first frequency-domain resource, such that the first frequency-domain resource is properly configured based on accuracy requirements of a sensing service.

In the method according to the embodiments of the present disclosure, spreading is further performed on the information transmitted within the first time-domain unit and the second time-domain unit, such that the multi-user multiplexing efficiency is improved. In addition, the first spreading factor and the second spreading factor are independently set, such that the second time-domain unit itself multiplexes a plurality of users in an FDM manner. Therefore, the quantity of users multiplexed through spreading is appropriately reduced.

For the second case described above:

FIG. 10 is a flowchart of a sensing method according to some exemplary embodiments of the present disclosure. The method is applicable to the system illustrated in FIG. 4. The method includes the following steps.

**In S1002,** a transmitter device transmits first information on a first frequency-domain resource within a first time-domain unit and second information on a second frequency-domain resource within a second time-domain unit to a receiver device, wherein the first information includes a second DMRS and a first reference signal.

The first frequency-domain resource includes the second frequency-domain resource, the first frequency-domain resource is greater than the second frequency-domain resource, and the quantity of frequency-domain units occupied by the first frequency-domain resource is greater than the quantity of frequency-domain units occupied by the second frequency-domain resource. In some embodiments, the frequency-domain unit refers to an RE or a subcarrier.

In some embodiments, both a frequency-domain start position and a frequency-domain end position of the second frequency-domain resource are within the first frequency-domain resource. In some embodiments, the frequency-domain start position of the second frequency-domain resource is the same as the frequency-domain start position of the first frequency-domain resource, and the frequency-domain end position of the second frequency-domain resource is within the first frequency-domain resource. In some embodiments, the frequency-domain end position of the second frequency-domain resource is the same as the frequency-domain end position of the first frequency-domain resource, and the frequency-domain start position of the second frequency-domain resource is within the first frequency-domain resource.

In some embodiments, the first time-domain unit includes at least one of a slot, a time-domain symbol, or an OFDM symbol, and the second time-domain unit includes at least one of a slot, a time-domain symbol, or an OFDM symbol.

In some embodiments, the first time-domain unit is the time-domain unit occupied by the DMRS. For example, the first time-domain unit is the first symbol occupied by the DMRS. Alternatively, the first time-domain unit is the first M symbols occupied by the DMRS, and M is a positive integer greater than 1.

The second DMRS is mapped to the second frequency-domain resource within the first time-domain unit for transmission. In some embodiments, the sequence corresponding to the second DMRS is generated based on the size of the second frequency-domain resource. In some embodiments, the second DMRS is used to demodulate information on the first frequency-domain resource and/or the second frequency-domain resource. In some embodiments, the second DMRS is further used for sensing.

In some embodiments, the first information includes a first reference signal, and the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource. In some embodiments, the sequence corresponding to the first reference signal is generated based on the size of the third frequency-domain resource.

The first reference signal is used to generate the sensing information. In some embodiments, the first reference signal is a DMRS. In some embodiments, the first reference signal is different from the DMRS, and is a reference signal other than the DMRS. In some embodiments, the first reference signal is further used to demodulate information on the first frequency-domain resource and/or the second frequency-domain resource.

In some embodiments, the second DMRS includes DMRSs corresponding to A ports, and the first reference signal includes DMRSs corresponding to some of the A ports. That is, the DMRSs corresponding to the A ports are transmitted within a range of the second frequency-domain resource within the first time-domain unit, and the DMRSs corresponding to some of the A ports are transmitted within a range of other frequency-domain resources than the second frequency-domain resource within the first frequency-domain resource. A is a positive integer.

In some embodiments, the third frequency-domain resource includes a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources.

In some embodiments, the receiver device generates the sensing information based on the second DMRS and the first reference signal.

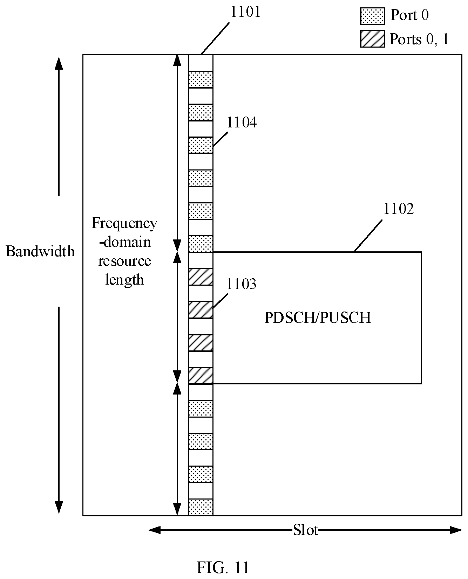

Using an example where the method according to the embodiments of the present disclosure is applicable to transmission of a physical channel, FIG. 11 is a schematic diagram of time-frequency resources occupied by a second DMRS and a first reference signal according to some exemplary embodiments of the present disclosure. As illustrated in FIG. 11, the transmitter device transmits second DMRSs 1103 corresponding to A ports within a range of the second frequency-domain resource 1102 within the first time-domain unit according to an NR DMRS rule (including a DMRS sequence generation rule and a DMRS pattern), and transmits first reference signals 1104 corresponding to some of the A ports in frequency-domain resources other than the second frequency-domain resource 1102 within a range of the first frequency-domain resource 1101. For the case of 2 ports (ports 0 and 1), the physical channel is mapped to the frequency-domain resources occupied by the PDSCH/PUSCH completely according to the NR DMRS rule. The sequence corresponding to the second DMRS 1103 is generated independently, that is, the length of the sequence is related to the length of the second frequency-domain resource 1102. The first reference signal 1104 on the frequency-domain resource other than the second frequency-domain resource 1102 is independently generated, and a pattern of the first reference signal is still a DMRS pattern, for example, a pattern corresponding to the port 0. That is, REs corresponding to ports 0 and 1 are used to transmit the first reference signal 1104 in the first frequency-domain resource 1101, transmit the second DMRS 1103 that is used to demodulate the physical channel within the range of the second frequency-domain resource 1102, and transmit the independently generated first reference signal 1104 (which is an RS sequence, or the upper part and the lower part respectively correspond to two RS sequences) in other resources. The first reference signal 1104 is a reference signal different from the DMRS. In the solution, transmission of the physical channel follows a solution in some practices, and implementation of a product is slightly affected.

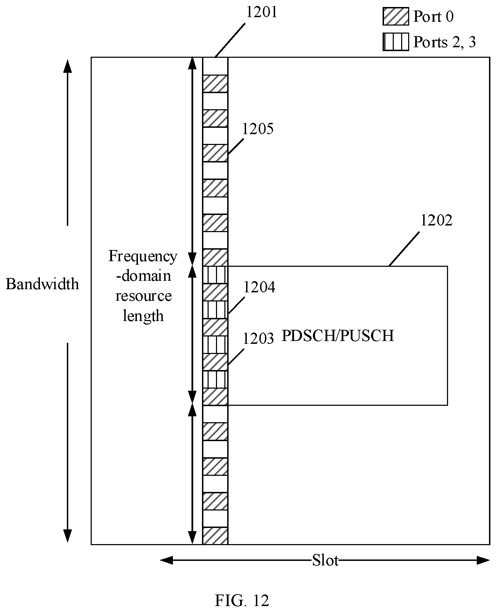

FIG. 12 is a schematic diagram of time-frequency resources occupied by a second DMRS and a first reference signal according to some exemplary embodiments of the present disclosure. As illustrated in FIG. 12, the transmitter device transmits a second DMRS 1203 and a second DMRS 1204 that correspond to A ports within a range of the second frequency-domain resource 1202 within the first time-domain unit according to an NR DMRS rule (including a DMRS sequence generation rule and a DMRS pattern), and transmits first reference signals 1205 corresponding to some of the A ports within the range of the first frequency-domain resource 1201 in frequency-domain resources other than the second frequency-domain resource 1202. For the case of 4 ports (ports 0, 1, 2, and 3), the second DMRS 1203 and the second DMRS 1204 corresponding to ports 2 and 3 are generated and mapped to a range of a frequency-domain resource occupied by the PDSCH/PUSCH completely according to the NR DMRS rule. The first reference signal 1205 corresponding to the port 0 is generated and mapped based on the range of the first frequency-domain resource 1201. The first reference signal 1205 is a DMRS. In the solution, the sensing signal is transmitted without a plurality of ports, which may save the system overhead.

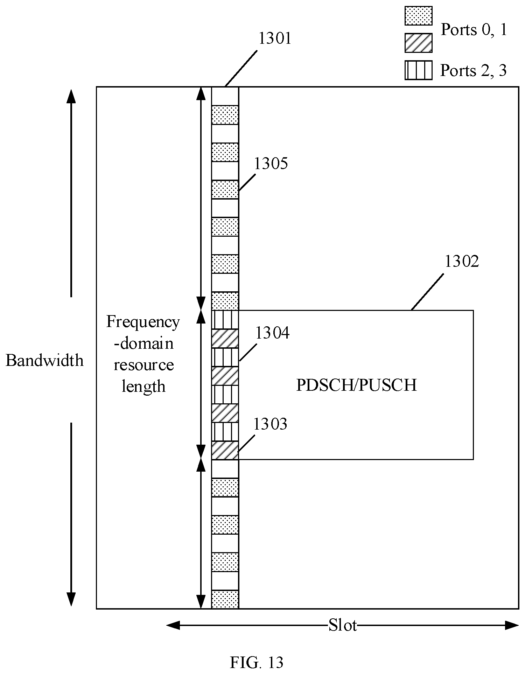

FIG. 13 is a schematic diagram of time-frequency resources occupied by a second DMRS and a first reference signal according to some exemplary embodiments of the present disclosure. As illustrated in FIG. 13, the transmitter device transmits a second DMRS 1303 and a second DMRS 1304 that correspond to A ports within a range of the second frequency-domain resource 1302 within the first time-domain unit according to an NR DMRS rule (including a DMRS sequence generation rule and a DMRS pattern), and transmits first reference signals 1305 corresponding to some of the A ports within the range of the first frequency-domain resource 1301 in frequency-domain resources other than the second frequency-domain resource 1302. For the case of 4 ports (ports 0, 1, 2, and 3), the second DMRS 1303 and the second DMRS 1304 corresponding to ports 0, 1, 2, and 3 are generated and mapped to the range of the frequency-domain resource occupied by the PDSCH/PUSCH completely according to the NR DMRS rule. The first reference signal 1305 independently generated in other resources is an RS sequence, or the upper part and the lower part respectively correspond to two RS sequences. The first reference signal 1305 is a reference signal different from the DMRS. In the solution, transmission of the physical channel follows a solution in some practices, and implementation of a product is slightly affected.

In some embodiments, the frequency-domain spacing between the physical resources occupied by the first reference signal is greater than the frequency-domain spacing between the physical resources occupied by the second DMRS. Alternatively, a frequency-domain density of the first reference signal is less than a frequency-domain density of the second DMRS.

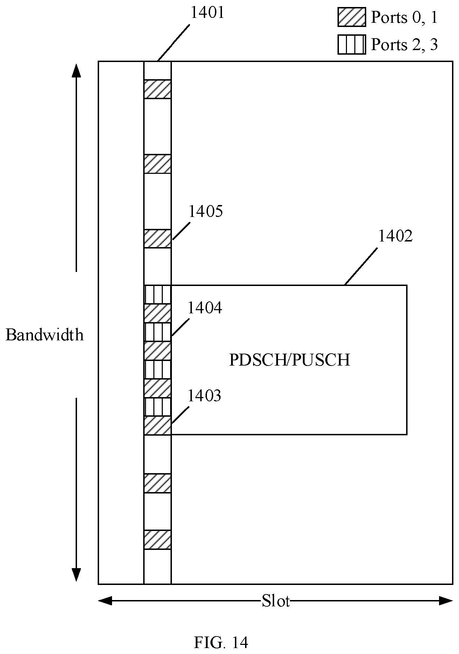

Using an example where the method according to the embodiments of the present disclosure is applicable to transmission of a physical channel, FIG. 14 is a schematic diagram of time-frequency resources occupied by a second DMRS and a first reference signal according to some exemplary embodiments of the present disclosure. As illustrated in FIG. 14, the transmitter device transmits a second DMRS 1403 and a second DMRS 1404 within a range of the second frequency-domain resource 1402 within the first time-domain unit according to an NR DMRS rule (including a DMRS sequence generation rule and a DMRS pattern), and transmits first reference signals 1405 that are more sparse within the range of the first frequency-domain resource 1401 in frequency-domain resources other than the second frequency-domain resource 1402. Since the sensing signal requires large bandwidth transmission and does not necessarily require the high density, the sparse first reference signal 1405 reduces the system overhead. DMRSs corresponding to the ports 0 and 1 are transmitted within a range of the first frequency-domain resource 1401, and have a lower frequency-domain density outside the second frequency-domain resource 1402. For example, only an RE is reserved in each 12 subcarriers (an RB), or an RE is reserved in a plurality of RBs. Although the frequency-domain density changes, the DMRS sequence is still generated based on the quantity of REs actually occupied in the first frequency-domain resource 1401, that is, the DMRS sequence corresponds to a single DMRS sequence. The second DMRSs 1404 corresponding to the ports 2 and 3 are transmitted only within the range of the second frequency-domain resource 1402. The first reference signal 1405 is a DMRS.

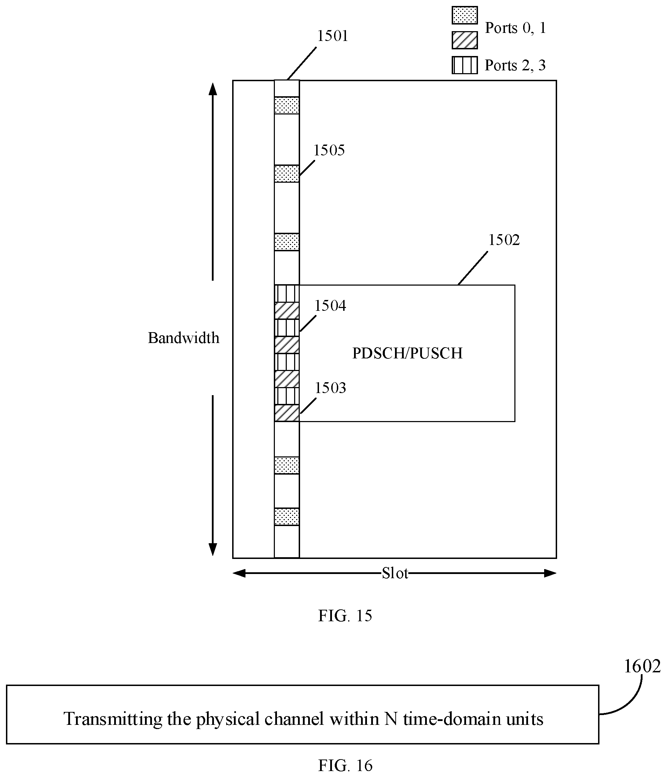

FIG. 15 is a schematic diagram of time-frequency resources occupied by a second DMRS and a first reference signal according to some exemplary embodiments of the present disclosure. As illustrated in FIG. 15, the transmitter device transmits a second DMRS 1503 and a second DMRS 1504 within a range of the second frequency-domain resource 1502 within the first time-domain unit according to an NR DMRS rule (including a DMRS sequence generation rule and a DMRS pattern), and transmits first reference signals 1505 that are more sparse within the range of the first frequency-domain resource 1501 in frequency-domain resources other than the second frequency-domain resource 1502. For the case of 4 ports (ports 0, 1, 2, and 3), the second DMRS 1503 and the second DMRS 1504 corresponding to ports 0, 1, 2, and 3 are generated and mapped to the range of the frequency-domain resource occupied by the PDSCH/PUSCH completely according to the NR DMRS rule. The overhead of the first reference signal 1505 outside the second frequency-domain resource 1502 is significantly reduced, a pattern of the first reference signal is irrelevant to DMRS patterns corresponding to the ports 0, 1, 2, and 3, and a sequence thereof is also independently generated. The first reference signal 1505 is a reference signal different from the DMRS.

In some embodiments, the first information further includes at least one of:

- partial data information; or
- partial TB information.

In some embodiments, the second information includes at least one of:

- data information;
- partial data information;
- TB information; or
- partial TB information.

In some embodiments, all or part of the data information is mapped to frequency-domain resources that are not occupied by the DMRS in the second frequency-domain resource within the first time-domain unit. In some embodiments, all or part of the data information is mapped to frequency-domain resources that are not occupied by the reference signal in the first frequency-domain resource within the first time-domain unit.

In some embodiments, the first time-domain unit and the first frequency-domain resource are indicated by a network device. In some embodiments, configuration signaling for configuring the first frequency-domain resource includes at least one of:

- a frequency-domain resource start point of the first frequency-domain resource;
- a quantity of frequency-domain resources of the first frequency-domain resource;
- a frequency-domain resource end point of the first frequency-domain resource; or
- a frequency-domain resource spacing of the first frequency-domain resource.

In some embodiments, the frequency-domain resource includes at least one of an RB, a subcarrier, or an RE.

It should be noted that the frequency-domain resource is equivalent to/replaceable with a physical resource.

In some embodiments, the second frequency-domain resource is configured by the network device.

In some embodiments, a first spreading factor corresponding to the first time-domain unit and a second spreading factor corresponding to the second time-domain unit are independently set. The first spreading factor is configured to spread information transmitted within the first time-domain unit, and the second spreading factor is configured to spread information transmitted within the second time-domain unit. In some embodiments, spreading the information transmitted within the first time-domain unit refers to frequency-domain spreading, such that the multi-user multiplexing efficiency is improved. In some embodiments, spreading the information transmitted within the second time-domain unit refers to frequency-domain spreading, such that the multi-user multiplexing efficiency is improved.

In some embodiments, the first spreading factor is greater than the second spreading factor.

**In S1004,** the receiver device acquires the data information based on the first information and the second information.

In some embodiments, the receiver device demodulates the information on the first frequency-domain resource and/or the second frequency-domain resource using the second DMRS and/or the first reference signal in the first information, such that the data information is acquired based on the first information and the second information. The data information is information transmitted by a transmitter device to a receiver device. For example, the information demodulated using the second DMRS and/or the first reference signal includes information carried by frequency-domain resources other than those carrying reference signals, specifically excluding the first frequency-domain resource and/or the second frequency-domain resource.

**In S1006,** the receiver device generates sensing information based on the second DMRS and the first reference signal.

In some embodiments, the sensing information is used to sense a target and/or an environment. The receiver device acquires detection information (sensing information) based on the second DMRS and the first reference signal within the first time-domain unit. The detection information is used to identify a target or a measurement environment, for example, a measurement distance, a delay, an angle, a movement speed, and a phase. In some embodiments, the receiver device reports the detection information.

It should be noted that in a downlink scenario, a receiver device is a terminal device, and a transmitter device is a network device. In an uplink scenario, a receiver device is a network device, and a transmitter device is a terminal device. The method according to the embodiments of the present disclosure is used for applicable to a physical channel. In an uplink scenario, the physical channel includes a PUSCH and/or a PUCCH. In a downlink scenario, the physical channel includes a PDSCH and/or a PDCCH.

It should be noted that the sensing in the embodiments of the present disclosure specifically refers to (be equivalent to/replaceable with) positioning, ranging, speed measurement, angle measurement, target imaging, target detection, target tracking, target identification, and the like.

In the embodiments of the present disclosure, S 1004 and S 1006 are optional. In different embodiments, one or more of these processes may be omitted or replaced. S1004 and S1006 are performed in a different order or simultaneously. S 1002 and S 1004 are performed as independent embodiments, S1002 and S 1006 are performed as independent embodiments, which is not limited.

S1002 may be performed as an independent embodiment, for example, separately performed as a method for transmitting information performed by a terminal device or a network device, or separately performed as a method for receiving information performed by a terminal device or a network device; S1002 and S1004 are performed as independent embodiments, for example, separately performed as a method for acquiring data information; and S1002 and S1006 are performed as independent embodiments, for example, separately performed as a sensing method.

In summary, in the method according to the embodiments, the first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission.

In the method according to the embodiments of the present disclosure, the first time-domain unit is the time-domain symbol occupied by the first DMRS. Because the first time-domain symbol occupied by the DMRS exists all the time, the above solution is applicable to all scenarios, such that the implementation complexity of the network device and the terminal device is simplified. In the case where the network device schedules the first time-domain unit, the network device determines the position of the first time-domain unit based on a specific scheduling status to avoid scattered resources in a system. Therefore, the system efficiency is improved.

In the method provided in the embodiments of the present disclosure, since the data is transmitted only over a small second frequency-domain resource, a transmission mechanism in some practices, such as a TBS determination manner, is reused to the greatest extent. In addition, the data occupies the first frequency domain resource. Because data within different time-domain units occupies different frequency domain resources, scattered resources are avoided, and the system efficiency is improved.

In the method according to the embodiments of the present disclosure, the network device further configures the first frequency-domain resource, such that the first frequency-domain resource is properly configured based on accuracy requirements of a sensing service.

In the method according to the embodiments of the present disclosure, spreading is further performed on the information transmitted within the first time-domain unit and the second time-domain unit, such that the multi-user multiplexing efficiency is improved. In addition, the first spreading factor and the second spreading factor are independently set, such that the second time-domain unit itself multiplexes a plurality of users in an FDM manner. Therefore, the quantity of users multiplexed through spreading is appropriately reduced.

In the method according to the embodiments of the present disclosure, the reference signal is further transmitted in the manner illustrated in FIG. 11, such that transmission of a physical channel follows a solution in some practices, and implementation of a product is slightly affected. In addition, the reference signal is transmitted in the manner illustrated in FIG. 12, and the system overhead is saved since the sensing signal is not transmitted by a plurality of ports. In addition, the reference signal is transmitted in the manner illustrated in FIG. 13, such that transmission of a physical channel follows a solution in some practices, and implementation of a product is slightly affected. In addition, the reference signal is transmitted in the manner illustrated in FIG. 14, and the sparse first reference signal to be reduces the system overhead since the sensing signal requires the large bandwidth transmission without the high density. In addition, the reference signal is transmitted in the manner illustrated in FIG. 15, such that the overhead of the first reference signal outside the second frequency-domain resource is significantly reduced.

Using as an example where the method according to the above embodiments is applicable to transmission of a physical channel, FIG. 16 is a flowchart of a method for transmitting a physical channel according to some exemplary embodiments of the present disclosure. The method is performed by a communication device, and the communication device includes a terminal device and/or a network device. The method includes the following process.

**In S1602,** the physical channel is transmitted through N time-domain units.

The N time-domain units include a first time-domain unit and a second time-domain unit, and N is a positive integer. The first frequency-domain resource occupied by the physical channel within the first time-domain unit is greater than the second frequency-domain resource occupied by the physical channel within the second time-domain unit, and the first information transmitted over the physical channel within the first time-domain unit is used for sensing.

In some embodiments, both the start position and the end position of the second frequency-domain resource in the frequency domain are within the first frequency-domain resource. In some embodiments, a frequency-domain start position of the second frequency-domain resource is the same as a frequency-domain start position of the first frequency-domain resource, and a frequency-domain end position of the second frequency-domain resource is within the first frequency-domain resource. In some embodiments, the frequency-domain end position of the second frequency-domain resource is the same as the frequency-domain end position of the first frequency-domain resource, and the frequency-domain start position of the second frequency-domain resource is within the first frequency-domain resource.

In some embodiments, the first time-domain unit includes at least one of a slot, a time-domain symbol, or an OFDM symbol, and the second time-domain unit includes at least one of a slot, a time-domain symbol, or an OFDM symbol.

The first information and the second information that is transmitted within the first time-domain unit are used for the receiver device to acquire data information. The first information is used for the receiver device to generate sensing information, such that the sensing is performed based on the sensing information.

In some embodiments, the first time-domain unit and the first frequency-domain resource are indicated by a network device. In some embodiments, the first time-domain unit includes one or more time-domain units.

In some embodiments, configuration signaling for configuring the first frequency-domain resource includes at least one of:

- a frequency-domain resource start point of the first frequency-domain resource;
- a quantity of frequency-domain resources of the first frequency-domain resource;
- a frequency-domain resource end point of the first frequency-domain resource; or
- a frequency-domain resource spacing of the first frequency-domain resource.

In some embodiments, the frequency-domain resource includes at least one of an RB, a subcarrier, or an RE.

It should be noted that the frequency-domain resource is equivalent to/replaceable with a physical resource.

In some embodiments, the second frequency-domain resource is configured by the network device. The second frequency-domain resource is used to transmit at least one of:

· data information of a physical channel;

· partial data information of a physical channel;
· TB information;
· partial TB information; or
· ·signaling.

The signaling includes at least one of downlink control information (DCI) or uplink control information (UCI).

In some embodiments, the information transmitted over the physical channel within the first time-domain unit is used for both sensing and data transmission.

In some embodiments, the data information of the physical channel within the first time-domain unit is mapped to frequency-domain resources that are not occupied by the DMRS in the second frequency-domain resource within the first frequency-domain resource. In some embodiments, the data information of the physical channel within the first time-domain unit is mapped to frequency-domain resources that are not occupied by the DMRS in the first frequency-domain resource.

In some embodiments, frequency-domain spreading is present for transmitting the reference signal and/or the data information within the first time-domain unit. In some embodiments, a first spreading factor corresponding to the first time-domain unit and a second spreading factor corresponding to the second time-domain unit are independently set. The first spreading factor is configured to spread information transmitted within the first time-domain unit, and the second spreading factor is configured to spread information transmitted within the second time-domain unit.

In some embodiments, spreading the information transmitted within the first time-domain unit refers to frequency-domain spreading, such that the multi-user multiplexing efficiency is improved. In some embodiments, spreading the information transmitted within the second time-domain unit refers to frequency-domain spreading, such that the multi-user multiplexing efficiency is improved. In some embodiments, the first spreading factor is greater than the second spreading factor.

In some embodiments, the first time-domain unit is a time-domain unit in which a DMRS of a physical channel is located, and the DMRS is used for sensing. For example, in the case where the first time-domain unit includes a single time-domain unit, the first time-domain unit is the first symbol occupied by the DMRS, or a symbol indicated by the network device in the symbols occupied by the DMRS through configuration signaling, or a symbol indicated by a predetermined rule in the symbols occupied by the DMRS. Alternatively, in the case where the first time-domain unit includes a plurality of time-domain units, the first time-domain unit is the first M symbols occupied by the DMRS, wherein M is a positive integer greater than 1, or a plurality of symbols indicated by the network device in the symbols occupied by the DMRS through configuration signaling, or a plurality of symbols indicated by a predetermined rule in the symbols occupied by the DMRS.

In some embodiments, the first information includes a DMRS, and the DMRS is used to demodulate information on the first frequency-domain resource and/or the second frequency-domain resource. In some embodiments, the DMRS is further used for the receiver device to generate sensing information.

In some embodiments, the first information further includes at least one of:

• partial data information;
• partial TB information; or
• a first reference signal.

The first reference signal is used to generate sensing information. In some embodiments, the first reference signal is a DMRS. In some embodiments, the first reference signal is different from the DMRS, and is a reference signal other than the DMRS.

In some embodiments, the DMRS in the first information is mapped to the first frequency-domain resource within the first time-domain unit for transmission. In some embodiments, the DMRS is mapped to the entire first frequency-domain resource for transmission. In some embodiments, the DMRS is mapped to the second frequency-domain resource and a third frequency-domain resource within the first time-domain unit for transmission, and the third frequency-domain resource is a portion of the first frequency-domain resource that is not overlapped with the second frequency-domain resource. In some embodiments, the sequence corresponding to the DMRS is generated based on the size of the first frequency-domain resource. In some embodiments, the DMRS is used to demodulate information on the first frequency-domain resource and/or the second frequency-domain resource. The DMRS is further used for sensing, and the receiver device generates sensing information based on the DMRS.

In some embodiments, the first range in the first frequency-domain resource is used to transmit the DMRSs corresponding to the A ports, and the second range in the first frequency-domain resource is used to transmit the first reference signals corresponding to some of the A ports. The first range is a range corresponding to the second frequency-domain resource within the first frequency-domain resource, the second range is a range other than the first range within the first frequency-domain resource, and the first reference signal is used for sensing. A is a positive integer.

In some embodiments, the first range in the first frequency-domain resource is used to transmit the DMRSs corresponding to the A ports, and the second range in the first frequency-domain resource is used to transmit the first reference signals corresponding to some of the A ports. The first range is a range corresponding to the second frequency-domain resource within the first frequency-domain resource, and the second range is a range other than the first range within the first frequency-domain resource. The first reference signal is used for sensing, and a frequency-domain density of the first reference signal is lower than a frequency-domain density of the DMRS. Alternatively, the frequency-domain spacing between the physical resources occupied by the first reference signal is greater than the frequency-domain spacing between the physical resources occupied by the DMRS.

In some embodiments, the DMRS is used for demodulation of a physical channel, and the first reference signal is different from the DMRS. In some embodiments, the DMRS is used for demodulation of a physical channel, and the DMRS and the first reference signal are used for sensing. In some embodiments, the first reference signal is a DMRS.

In some embodiments, the DMRS is mapped to the second frequency-domain resource within the first time-domain unit for transmission. In some embodiments, the sequence corresponding to the DMRS is generated based on the size of the second frequency-domain resource. In some embodiments, the DMRS is used to demodulate information on the first frequency-domain resource and/or the second frequency-domain resource. In some embodiments, the DMRS is further used for sensing. In some embodiments, the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource. In some embodiments, the sequence corresponding to the first reference signal is generated based on the size of the third frequency-domain resource. The first reference signal is used to generate the sensing information. In some embodiments, the first reference signal is further used to demodulate information on the first frequency-domain resource and/or the second frequency-domain resource.

In some embodiments, the third frequency-domain resource includes a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources.

In some embodiments, the communication device further transmits the physical channel within a single time-domain unit. The frequency-domain resources occupied by the data information transmitted through the physical channel within a single time-domain unit are less than the frequency-domain resources occupied by the reference signal used for sensing within the single time-domain unit.

In some embodiments, the sensing is used to sense a target and/or an environment.

In some embodiments, the physical channel includes at least one of:

- · a·PDSCH;
- · a·PDCCH;
- · a·PUSCH; or
- · a·PUCCH.

It should be noted that the transmission includes transmitting and/or receiving. In the case where the transmission refers to transmitting, the method according to the embodiments of the present disclosure is performed by a terminal or network device, and in the case where the transmission refers to receiving, the method according to the embodiments of the present disclosure is performed by a terminal or network device.

In summary, in the method according to the embodiments, the first time-domain unit occupies a large bandwidth for data transmission and sensing, and the second time-domain unit occupies a small bandwidth for data transmission, such that both the sensing requirements and the data transmission efficiency are considered. That is, it is not necessary to occupy a large bandwidth for signal transmission within both the first time-domain unit and the second time-domain unit due to sensing requirements. Instead, a large bandwidth is exclusively allocated to the first time-domain unit for sensing, and only a small bandwidth needs to be allocated to the second time-domain unit for data transmission.

It should be noted that the sequence of the method steps according to the embodiments of the present disclosure may be appropriately adjusted, the processes may be increased or decreased according to the situation, and different processes may be freely combined to form a new embodiment. Any variations of the method that may be derived by those skilled in the art within the technical scope disclosed herein also fall within the scope of protection of the present disclosure and thus are not described herein. It should be noted that the order of the different cases as described above does not have a preferred meaning, but is merely for convenience of description.

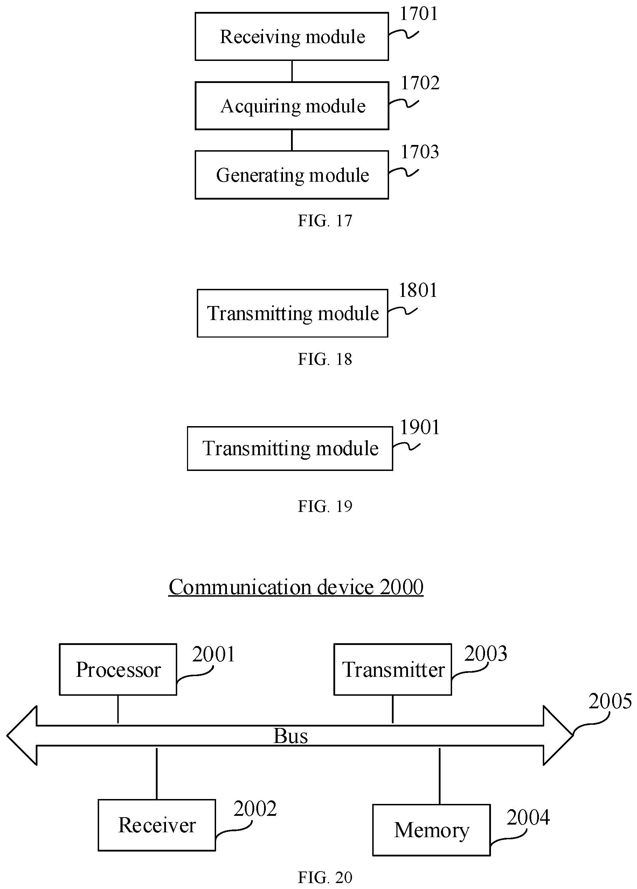

FIG. 17 is a block diagram of a sensing apparatus according to some exemplary embodiments of the present disclosure. As illustrated in FIG. 17, the apparatus includes:

a receiving module 1701, configured to receive first information on a first frequency-domain resource within a first time-domain unit and second information on a second frequency-domain resource within a second time-domain unit, wherein the first frequency-domain resource includes the second frequency-domain resource.

The first frequency-domain resource is greater than the second frequency-domain resource, and the quantity of frequency-domain units occupied by the first frequency-domain resource is greater than the quantity of frequency-domain units occupied by the second frequency-domain resource. In some embodiments, the frequency-domain unit refers to an RE or a subcarrier.

In some embodiments, both the start position and the end position of the second frequency-domain resource in the frequency domain are within the first frequency-domain resource. In some embodiments, a frequency-domain start position of the second frequency-domain resource is the same as a frequency-domain start position of the first frequency-domain resource, and a frequency-domain end position of the second frequency-domain resource is within the first frequency-domain resource. In some embodiments, the frequency-domain end position of the second frequency-domain resource is the same as the frequency-domain end position of the first frequency-domain resource, and the frequency-domain start position of the second frequency-domain resource is within the first frequency-domain resource.

In some embodiments, the first time-domain unit includes at least one of a slot, a time-domain symbol, or an OFDM symbol, and the second time-domain unit includes at least one of a slot, a time-domain symbol, or an OFDM symbol.

The first information and the second information are used to acquire data information. The first information is used to generate sensing information, such that the sensing is performed based on the sensing information.

In some embodiments, the first time-domain unit is the time-domain unit occupied by the DMRS. For example, in the case where the first time-domain unit includes a single time-domain unit, the first time-domain unit is the first symbol occupied by the DMRS, or a symbol indicated by the network device in the symbols occupied by the DMRS through configuration signaling, or a symbol indicated by a predetermined rule in the symbols occupied by the DMRS. Alternatively, in the case where the first time-domain unit includes a plurality of time-domain units, the first time-domain unit is the first M symbols occupied by the DMRS, wherein M is a positive integer greater than 1, or a plurality of symbols indicated by the network device in the symbols occupied by the DMRS through configuration signaling, or a plurality of symbols indicated by a predetermined rule in the symbols occupied by the DMRS.

Because the first time-domain symbol occupied by the DMRS exists all the time, the above solution is applicable to all scenarios, such that the implementation complexity of the network device and the terminal device is simplified. In the case where the network device schedules the first time-domain unit, the network device determines the position of the first time-domain unit based on a specific scheduling status to avoid scattered resources in a system. Therefore, the system efficiency is improved.

In some embodiments, the first information includes a DMRS, and the DMRS is used to demodulate information on the first frequency-domain resource and/or the second frequency-domain resource. In some embodiments, the DMRS is further used for the apparatus to generate sensing information.

In some embodiments, the first information further includes at least one of:

- partial data information;
- partial TB information; or
- a first reference signal.

The first reference signal is used to generate sensing information. In some embodiments, the first reference signal is a DMRS. In some embodiments, the first reference signal is different from the DMRS, and is a reference signal other than the DMRS.

In some embodiments, the second information includes at least one of:

- data information;
- partial data information;
- TB information; or
- partial TB information.

In some embodiments, all or part of the data information is mapped to frequency-domain resources that are not occupied by the DMRS in the second frequency-domain resource within the first time-domain unit. Since the data is transmitted only over the small second frequency-domain resource, a transmission mechanism (a transmission mechanism of a physical channel) in some practices, such as a TBS determination manner, can be reused to the greatest extent.

In some embodiments, all or part of the data information is mapped to frequency-domain resources that are not occupied by the reference signal in the first frequency-domain resource within the first time-domain unit. Because data within different time-domain units occupies different frequency-domain resources, scattered resources are avoided, and the system efficiency is improved.

In some embodiments, the first time-domain unit and the first frequency-domain resource are indicated by a network device. In some embodiments, the network device indicates the first frequency-domain resource via higher layer signaling or dynamic signaling. In some embodiments, the network device transmits signaling to configure the first frequency-domain resource in the physical channel used for sensing. The network device configures the first frequency-domain resource, such that the first frequency-domain resource is properly configured based on accuracy requirements of a sensing service.

In some embodiments, configuration signaling for configuring the first frequency-domain resource includes at least one of:

- a frequency-domain resource start point of the first frequency-domain resource;
- a quantity of frequency-domain resources of the first frequency-domain resource;
- a frequency-domain resource end point of the first frequency-domain resource; or
- a frequency-domain resource spacing of the first frequency-domain resource.

In some embodiments, the frequency-domain resource includes at least one of an RB, a subcarrier, or an RE.

In some embodiments, in the case where the configuration information includes the frequency-domain resource start point, the first frequency-domain resource is determined based on the frequency-domain resource start point and at least one of the frequency-domain resource end point of the first time-domain unit, a predetermined frequency-domain resource end point, or a predetermined quantity of frequency-domain resources. In some embodiments, in the case where the configuration information includes the frequency-domain resource end point, the first frequency-domain resource is determined based on the frequency-domain resource end point and at least one of the frequency-domain resource start point of the first time-domain unit, a predetermined frequency-domain resource start point, or a predetermined quantity of frequency-domain resources. In some embodiments, in the case where the configuration information includes the quantity of frequency-domain resources, the first frequency-domain resource is determined based on the quantity of frequency-domain resources and at least one of the frequency-domain resource start point of the first time-domain unit, the frequency-domain resource end point of the first time-domain unit, the predetermined frequency-domain resource start point, or the predetermined frequency-domain resource end point. In some embodiments, in the case where the configuration information includes the frequency-domain resource spacing, the first frequency-domain resource is determined based on the frequency-domain resource spacing, and at least one of the frequency-domain resource of the first time-domain unit, the predetermined quantity of frequency-domain resources, the frequency-domain resource start point of the first time-domain unit, the frequency-domain resource end point of the first time-domain unit, the predetermined frequency-domain resource start point, or the predetermined frequency-domain resource end point. In some embodiments, in the case where the configuration information includes a plurality of pieces of information in the configuration information, the first frequency-domain resource is determined with reference to the above content.

It should be noted that the frequency-domain resource is equivalent to/replaceable with a physical resource.

In some embodiments, the second frequency-domain resource is configured by the network device.

In some embodiments, a first spreading factor corresponding to the first time-domain unit and a second spreading factor corresponding to the second time-domain unit are independently set. The first spreading factor is configured to spread information transmitted within the first time-domain unit, and the second spreading factor is configured to spread information transmitted within the second time-domain unit. In some embodiments, spreading the information transmitted within the first time-domain unit refers to frequency-domain spreading, such that the multi-user multiplexing efficiency is improved. For example, a plurality of terminals occupy the same first time-domain symbol and the same first frequency-domain resource, and CDM is achieved using different spreading sequences. In some embodiments, spreading the information transmitted within the second time-domain unit refers to frequency-domain spreading, such that the multi-user multiplexing efficiency is improved. In some embodiments, the spreading factor or a spreading sequence identifier (for example, an index) is indicated by the network device. In some embodiments, the spreading sequence identifier is determined based on terminal-specific information (for example, a terminal identifier (UE ID)).

In some embodiments, the first spreading factor is greater than the second spreading factor. That is, the spreading factor in the first time-domain unit is large, and the spreading factor in the second time-domain unit is small. The second time-domain unit multiplexes a plurality of users in an FDM manner. Therefore, the quantity of users multiplexed through spreading is appropriately reduced.

For the case of sensing through the first DMRS:

In some embodiments, the DMRS in the first information includes a first DMRS, and the first DMRS is mapped to the first frequency-domain resource within the first time-domain unit for transmission. In some embodiments, the first DMRS is mapped to the entire first frequency-domain resource for transmission. In some embodiments, the first DMRS is mapped to the second frequency-domain resource and a third frequency-domain resource within the first time-domain unit for transmission, and the third frequency-domain resource is a portion of the first frequency-domain resource that is not overlapped with the second frequency-domain resource.

In some embodiments, the sequence corresponding to the first DMRS is generated based on the size of the first frequency-domain resource.

In some embodiments, the first DMRS is used to demodulate information on the first frequency-domain resource and/or the second frequency-domain resource. The first DMRS is further used for sensing.

For the case of sensing through the second DMRS and the first reference signal:

In some embodiments, the DMRS in the first information includes a second DMRS, and the second DMRS is mapped to the second frequency-domain resource within the first time-domain unit for transmission.

In some embodiments, the sequence corresponding to the second DMRS is generated based on the size of the second frequency-domain resource.

In some embodiments, the second DMRS is used to demodulate information on the first frequency-domain resource and/or the second frequency-domain resource. In some embodiments, the second DMRS is further used for sensing.

In some embodiments, the first information includes a first reference signal, and the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource.

In some embodiments, the sequence corresponding to the first reference signal is generated based on the size of the third frequency-domain resource.

The first reference signal is used to generate the sensing information. In some embodiments, the first reference signal is a DMRS. In some embodiments, the first reference signal is different from the DMRS, and is a reference signal other than the DMRS. In some embodiments, the first reference signal is further used to demodulate information on the first frequency-domain resource and/or the second frequency-domain resource.

In some embodiments, the second DMRS includes DMRSs corresponding to A ports, and the first reference signal includes DMRSs corresponding to some of the A ports. That is, the DMRSs corresponding to the A ports are transmitted within a range of the second frequency-domain resource within the first time-domain unit, and the DMRSs corresponding to some of the A ports are transmitted within a range of other frequency-domain resources than the second frequency-domain resource within the first frequency-domain resource. A is a positive integer.

In some embodiments, the third frequency-domain resource includes a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources.

In some embodiments, the sensing information is generated based on the second DMRS and the first reference signal.

In some embodiments, the frequency-domain spacing between the physical resources occupied by the first reference signal is greater than the frequency-domain spacing between the physical resources occupied by the second DMRS. Alternatively, a frequency-domain density of the first reference signal is less than a frequency-domain density of the second DMRS.

An acquiring module 1702 is configured to acquire data information based on the first information and the second information.

In some embodiments, the acquiring module demodulates the information on the first frequency-domain resource and/or the second frequency-domain resource using the DMRS in the first information, such that the data information is acquired based on the first information and the second information. The data information is information transmitted from the transmitter device to the apparatus. For example, the information demodulated using the DMRS includes information carried by frequency-domain resources other than frequency-domain resources carrying reference signals, specifically excluding the first frequency-domain resource and/or the second frequency-domain resource.

A generating module 1703 is configured to generate sensing information based on the first information.

In some embodiments, the sensing information is used to sense a target and/or an environment. The generating module 1703 acquires detection information (sensing information) based on the information within the first time-domain unit. The detection information is used to identify a target or a measurement environment, for example, a measurement distance, a delay, an angle, a movement speed, and a phase. In some embodiments, the apparatus reports the detection information by using a transmitting module.

In some embodiments, the generating module 1703 is configured to generate the sensing information based on the first DMRS.

In some embodiments, the generating module 1703 is configured to generate the sensing information based on the second DMRS and the first reference signal.

It should be noted that the sensing in the embodiments of the present disclosure specifically refers to (be equivalent to/replaceable with) positioning, ranging, speed measurement, angle measurement, target imaging, target detection, target tracking, target identification, and the like.

FIG. 18 is a block diagram of a sensing apparatus according to some exemplary embodiments of the present disclosure. As illustrated in FIG. 18, the apparatus includes:

a transmitting module 1801, configured to transmit first information on a first frequency-domain resource within a first time-domain unit and second information on a second frequency-domain resource within a second time-domain unit, wherein the first frequency-domain resource includes the second frequency-domain resource;

wherein the first information and the second information are used to acquire data information, and the first information is used to generate sensing information.

The first frequency-domain resource is greater than the second frequency-domain resource, and the quantity of frequency-domain units occupied by the first frequency-domain resource is greater than the quantity of frequency-domain units occupied by the second frequency-domain resource. In some embodiments, the frequency-domain unit refers to an RE or a subcarrier.

In some embodiments, the first time-domain unit includes at least one of a slot, a time-domain symbol, or an OFDM symbol, and the second time-domain unit includes at least one of a slot, a time-domain symbol, or an OFDM symbol.

In some embodiments, the first time-domain unit is the time-domain unit occupied by the DMRS. In some embodiments, the first time-domain unit is the first symbol occupied by the DMRS, or the first time-domain unit is the first M symbols occupied by the DMRS.

In some embodiments, the first information includes a DMRS, and the DMRS is used to demodulate information on the first frequency-domain resource and/or the second frequency-domain resource. In some embodiments, the DMRS is further used for the receiver device to generate sensing information.

In some embodiments, the first information further includes at least one of:

- partial data information;
- partial TB information; or
- a first reference signal.

The first reference signal is used to generate sensing information. In some embodiments, the first reference signal is a DMRS. In some embodiments, the first reference signal is different from the DMRS, and is a reference signal other than the DMRS.

In some embodiments, the second information includes at least one of:

- data information;
- partial data information;
- TB information; or
- partial TB information.

In some embodiments, all or part of the data information is mapped to frequency-domain resources that are not occupied by the DMRS in the second frequency-domain resource within the first time-domain unit. In some embodiments, all or part of the data information is mapped to frequency-domain resources that are not occupied by the reference signal in the first frequency-domain resource within the first time-domain unit.

In some embodiments, the first time-domain unit and the first frequency-domain resource are indicated by a network device. In some embodiments, configuration signaling for configuring the first frequency-domain resource includes at least one of:

- a frequency-domain resource start point of the first frequency-domain resource;
- a quantity of frequency-domain resources of the first frequency-domain resource;

- a frequency-domain resource end point of the first frequency-domain resource; or
- a frequency-domain resource spacing of the first frequency-domain resource.

In some embodiments, the frequency-domain resource includes at least one of an RB, a subcarrier, or an RE.

It should be noted that the frequency-domain resource is equivalent to/replaceable with a physical resource.

In some embodiments, the second frequency-domain resource is configured by the network device.

In some embodiments, a first spreading factor corresponding to the first time-domain unit and a second spreading factor corresponding to the second time-domain unit are independently set. In some embodiments, spreading the information transmitted within the first time-domain unit is frequency-domain spreading. In some embodiments, spreading the information transmitted within the second time-domain unit is frequency-domain spreading. In some embodiments, the first spreading factor is greater than the second spreading factor.

For the case of sensing through the first DMRS:

In some embodiments, the DMRS in the first information includes a first DMRS, and the first DMRS is mapped to the first frequency-domain resource within the first time-domain unit for transmission. In some embodiments, the first DMRS is mapped to the entire first frequency-domain resource for transmission. In some embodiments, the first DMRS is mapped to the second frequency-domain resource and a third frequency-domain resource within the first time-domain unit for transmission, and the third frequency-domain resource is a portion of the first frequency-domain resource that is not overlapped with the second frequency-domain resource.

In some embodiments, the sequence corresponding to the first DMRS is generated based on the size of the first frequency-domain resource.

In some embodiments, the first DMRS is used to demodulate information on the first frequency-domain resource and/or the second frequency-domain resource. The first DMRS is further used for sensing, and the receiver device generates sensing information based on the first DMRS.

For the case of sensing through the second DMRS and the first reference signal:

In some embodiments, the DMRS in the first information includes a second DMRS, and the second DMRS is mapped to the second frequency-domain resource within the first time-domain unit for transmission.

In some embodiments, the sequence corresponding to the second DMRS is generated based on the size of the second frequency-domain resource.

In some embodiments, the second DMRS is used to demodulate information on the first frequency-domain resource and/or the second frequency-domain resource. In some embodiments, the second DMRS is further used for sensing.

In some embodiments, the first information includes a first reference signal, and the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource.

In some embodiments, the sequence corresponding to the first reference signal is generated based on the size of the third frequency-domain resource.

The first reference signal is used to generate the sensing information. In some embodiments, the first reference signal is a DMRS. In some embodiments, the first reference signal is different from the DMRS, and is a reference signal other than the DMRS. In some embodiments, the first reference signal is further used to demodulate information on the first frequency-domain resource and/or the second frequency-domain resource.

In some embodiments, the second DMRS includes DMRSs corresponding to A ports, and the first reference signal includes DMRSs corresponding to some of the A ports. A is a positive integer.

In some embodiments, the third frequency-domain resource includes a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources.

In some embodiments, the receiver device generates the sensing information based on the second DMRS and the first reference signal.

In some embodiments, the frequency-domain spacing between the physical resources occupied by the first reference signal is greater than the frequency-domain spacing between the physical resources occupied by the second DMRS. Alternatively, a frequency-domain density of the first reference signal is less than a frequency-domain density of the second DMRS.

In some embodiments, the sensing information is used to sense a target and/or an environment.

It should be noted that the sensing in the embodiments of the present disclosure specifically refers to (be equivalent to/replaceable with) positioning, ranging, speed measurement, angle measurement, target imaging, target detection, target tracking, target identification, and the like.

FIG. 19 is a block diagram of an apparatus for transmitting a physical channel according to some exemplary embodiments of the present disclosure. As illustrated in FIG. 19, the apparatus includes:

a transmitting module 1901, configured to transmit the physical channel within N time-domain units, wherein the N time-domain units include a first time-domain unit and a second time-domain unit; and

wherein a first frequency-domain resource occupied by the physical channel within the first time-domain unit is greater than a second frequency-domain resource occupied by the physical channel within the second time-domain unit, and first information transmitted over the physical channel within the first time-domain unit is used for sensing.

In some embodiments, both the start position and the end position of the second frequency-domain resource in the frequency domain are within the first frequency-domain resource. In some embodiments, a frequency-domain start position of the second frequency-domain resource is the same as a frequency-domain start position of the first frequency-domain resource, and a frequency-domain end position of the second frequency-domain resource is within the first frequency-domain resource. In some embodiments, the frequency-domain end position of the second frequency-domain resource is the same as the frequency-domain end position of the first frequency-domain resource, and the frequency-domain start position of the second frequency-domain resource is within the first frequency-domain resource.

In some embodiments, the first time-domain unit includes at least one of a slot, a time-domain symbol, or an OFDM symbol, and the second time-domain unit includes at least one of a slot, a time-domain symbol, or an OFDM symbol.

The first information and the second information that is transmitted within the first time-domain unit are used for the receiver device to acquire data information. The first information is used for the receiver device to generate sensing information, such that the sensing is performed based on the sensing information.

In some embodiments, the first time-domain unit and the first frequency-domain resource are indicated by a network device. In some embodiments, the first time-domain unit includes one or more time-domain units.

In some embodiments, configuration signaling for configuring the first frequency-domain resource includes at least one of:

• a frequency-domain resource start point of the first frequency-domain resource;
• a quantity of frequency-domain resources of the first frequency-domain resource;
• a frequency-domain resource end point of the first frequency-domain resource; or
• a frequency-domain resource spacing of the first frequency-domain resource.

In some embodiments, the frequency-domain resource includes at least one of an RB, a subcarrier, or an RE.

It should be noted that the above frequency-domain resource is equivalent to/replaceable with a physical resource.

In some embodiments, the second frequency-domain resource is configured by the network device. The second frequency-domain resource is used to transmit at least one of:

• data information of a physical channel;
• partial data information of a physical channel;
• TB information;
• partial TB information; or
• signaling.

The signaling includes at least one of DCI or UCI.

In some embodiments, the information transmitted over the physical channel within the first time-domain unit is used for both sensing and data transmission.

In some embodiments, the data information of the physical channel within the first time-domain unit is mapped to frequency-domain resources that are not occupied by the DMRS in the second frequency-domain resource within the first frequency-domain resource. In some embodiments, the data information of the physical channel within the first time-domain unit is mapped to frequency-domain resources that are not occupied by the DMRS in the first frequency-domain resource.

In some embodiments, frequency-domain spreading is present for transmitting the reference signal and/or the data information within the first time-domain unit. In some embodiments, a first spreading factor corresponding to the first time-domain unit and a second spreading factor corresponding to the second time-domain unit are independently set. The first spreading factor is configured to spread information transmitted within the first time-domain unit, and the second spreading factor is configured to spread information transmitted within the second time-domain unit.

In some embodiments, spreading the information transmitted within the first time-domain unit refers to frequency-domain spreading, such that the multi-user multiplexing efficiency is improved. In some embodiments, spreading the information transmitted within the second time-domain unit refers to frequency-domain spreading, such that the multi-user multiplexing efficiency is improved. In some embodiments, the first spreading factor is greater than the second spreading factor.

In some embodiments, the first time-domain unit is a time-domain unit in which a DMRS of a physical channel is located, and the DMRS is used for sensing. For example, in the case where the first time-domain unit includes a single time-domain unit, the first time-domain unit is the first symbol occupied by the DMRS, or a symbol indicated by the network device in the symbols occupied by the DMRS through configuration signaling, or a symbol indicated by a predetermined rule in the symbols occupied by the DMRS. Alternatively, in the case where the first time-domain unit includes a plurality of time-domain units, the first time-domain unit is the first M symbols occupied by the DMRS, wherein M is a positive integer greater than 1, or a plurality of symbols indicated by the network device in the symbols occupied by the DMRS through configuration signaling, or a plurality of symbols indicated by a predetermined rule in the symbols occupied by the DMRS.

In some embodiments, the first information includes a DMRS, and the DMRS is used to demodulate information on the first frequency-domain resource and/or the second frequency-domain resource. In some embodiments, the DMRS is further used for the receiver device to generate sensing information.

In some embodiments, the first information further includes at least one of:

- partial data information;
- partial TB information; or
- a first reference signal.

The first reference signal is used to generate sensing information. In some embodiments, the first reference signal is a DMRS. In some embodiments, the first reference signal is different from the DMRS, and is a reference signal other than the DMRS.

In some embodiments, the DMRS in the first information is mapped to the first frequency-domain resource within the first time-domain unit for transmission. In some embodiments, the DMRS is mapped to the entire first frequency-domain resource for transmission. In some embodiments, the DMRS is mapped to the second frequency-domain resource and a third frequency-domain resource within the first time-domain unit for transmission, and the third frequency-domain resource is a portion of the first frequency-domain resource that is not overlapped with the second frequency-domain resource. In some embodiments, the sequence corresponding to the DMRS is generated based on the size of the first frequency-domain resource. In some embodiments, the DMRS is used to demodulate information on the first frequency-domain resource and/or the second frequency-domain resource. The DMRS is further used for sensing, and the receiver device generates sensing information based on the DMRS.

In some embodiments, the first range in the first frequency-domain resource is used to transmit the DMRSs corresponding to the A ports, and the second range in the first frequency-domain resource is used to transmit the first reference signals corresponding to some of the A ports. The first range is a range corresponding to the second frequency-domain resource within the first frequency-domain resource, the second range is a range other than the first range within the first frequency-domain resource, and the first reference signal is used for sensing. A is a positive integer.

In some embodiments, the first range in the first frequency-domain resource is used to transmit the DMRSs corresponding to the A ports, and the second range in the first frequency-domain resource is used to transmit the first reference signals corresponding to some of the A ports. The first range is a range corresponding to the second frequency-domain resource within the first frequency-domain resource, and the second range is a range other than the first range within the first frequency-domain resource. The first reference signal is used for sensing, and a frequency-domain density of the first reference signal is lower than a frequency-domain density of the DMRS. Alternatively, the frequency-domain spacing of the physical resources occupied by the first reference signal is greater than the frequency-domain spacing between the physical resources occupied by the DMRS.

In some embodiments, the DMRS is used for demodulation of a physical channel, and the first reference signal is different from the DMRS. In some embodiments, the DMRS is used for demodulation of a physical channel, and the DMRS and the first reference signal are used for sensing. In some embodiments, the first reference signal is a DMRS.

In some embodiments, the DMRS is mapped to the second frequency-domain resource within the first time-domain unit for transmission. In some embodiments, the sequence corresponding to the DMRS is generated based on the size of the second frequency-domain resource. In some embodiments, the DMRS is used to demodulate information on the first frequency-domain resource and/or the second frequency-domain resource. In some embodiments, the DMRS is further used for sensing. In some embodiments, the first reference signal is mapped to the third frequency-domain resource within the first time-domain unit for transmission. The first frequency-domain resource includes the third frequency-domain resource, and the third frequency-domain resource is not overlapped with (is different from) the second frequency-domain resource. In some embodiments, the sequence corresponding to the first reference signal is generated based on the size of the third frequency-domain resource. The first reference signal is used to generate the sensing information. In some embodiments, the first reference signal is further used to demodulate information on the first frequency-domain resource and/or the second frequency-domain resource.

In some embodiments, the third frequency-domain resource includes a first part of frequency-domain resources and a second part of frequency-domain resources located on two sides of the second frequency-domain resource.

In some embodiments, in the first reference signal sequence generated based on the size of the third frequency-domain resource, the sequence of the first reference signal carried by the first part of frequency-domain resources and the sequence of the first reference signal carried by the second part of frequency-domain resources are a single sequence carried by non-consecutive frequency-domain resources.

In some embodiments, the sequence corresponding to the first reference signal located in the first part of frequency-domain resources is generated based on the size of the first part of frequency-domain resources, and the sequence corresponding to the first reference signal located in the second part of frequency-domain resources is generated based on the size of the second part of frequency-domain resources.

In some embodiments, the apparatus further transmits the physical channel within a single time-domain unit. The frequency-domain resources occupied by the data information transmitted through the physical channel within a single time-domain unit are less than the frequency-domain resources occupied by the reference signal used for sensing within the single time-domain unit.

In some embodiments, the sensing is used to sense a target and/or an environment.

In some embodiments, the physical channel includes at least one of:

- a PDSCH;
- a·PDCCH;
- a·PUSCH; or
- a·PUCCH.

It should be noted that the transmission includes transmitting and/or receiving.

It should be noted that when implementing the functions of the apparatus according to the above embodiments, the division of the various functional modules is merely exemplary. In practical applications, the above functions may be assigned to different functional modules according to actual needs, i.e., the content structure of the device may be divided into different functional modules to achieve all or part of the above functions.

With regard to the apparatus in the above embodiments, the specific mode in which each module performs the operation has been described in detail in the embodiments related to the method and will not be described in detail herein.

FIG. 20 is a schematic structural diagram of a communication device (a terminal device and/or a network device) according to some exemplary embodiments of the present disclosure. The communication device 2000 includes: a processor 2001, a receiver 2002, a transmitter 2003, a memory 2004, and a bus 2005.

The processor 2001 includes one or more processing cores, and the processor 2001 executes various functional applications and performs information processing by running software programs and modules.

The receiver 2002 and the transmitter 2003 may be practiced as a communication assembly, which may be a communication chip.

The memory 2004 is connected to the processor 2001 by the bus 2005. The memory 2004 is configured to store one or more instructions, and the processor 2001 is configured to execute the one or more instructions to perform the steps in the above method embodiments.

In addition, the memory 2004 may be practiced by any type or combination of volatile or non-volatile storage devices including, but not limited to: magnetic or optical disks, electrically erasable programmable read-only memories (EEPROMs), erasable programmable read-only memories (EPROMs), static random access memories (SRAMs), read-only memories (ROMs), magnetic memories, flash memories, and programmable read-only memories (PROMs).

In the case where the communication device is practiced as a terminal device, the processor and the transceiver in the communication device in the embodiments of the present disclosure are implemented together as one communication chip, or the transceiver separately forms a communication chip. The transmitter in the transceiver performs transmitting processes performed by the terminal device in any one of the above methods, the receiver in the transceiver performs receiving processes performed by the terminal device in any one of the above methods, and the processor performs processes other than the transmitting and receiving processes. Details are not repeated herein.

In the case where the communication device is practiced as a network device, the processor and the transceiver in the communication device in the embodiments of the present disclosure are implemented together as one communication chip, or the transceiver separately forms a communication chip. The transmitter in the transceiver performs transmitting processes performed by the network device in any one of the above methods, the receiver in the transceiver performs receiving processes performed by the network device in any one of the above methods, and the processor performs processes other than the transmitting and receiving processes. Details are not repeated herein.

In some exemplary embodiments, a computer-readable storage medium is further provided. The computer-readable storage medium stores at least one instruction, at least one program, a code set, or an instruction set therein. The at least one instruction, the at least one program, the code set, or the instruction set, when loaded and executed by a processor, causes the processor to perform the sensing method or the method for transmitting the physical channel according to the above method embodiments.

In some exemplary embodiments, a chip is further provided. The chip includes programmable logic circuitry and/or one or more program instructions. The chip, when running, is caused to perform the sensing method or the method for transmitting the physical channel according to the above method embodiments.

In some exemplary embodiments, a computer program product is further provided. The computer program product, when running on a processor of a computer device, causes the computer device to perform the sensing method or the method for transporting a physical channel as described above.

Those skilled in the art should recognize that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A sensing method, performed by a receiver device, the method comprising:

   receiving first information on a first frequency-domain resource within a first time-domain unit and second information on a second frequency-domain resource within a second time-domain unit, wherein the first frequency-domain resource comprises the second frequency-domain resource;
   acquiring data information based on the first information and the second information; and
   generating sensing information based on the first information.

2. The method according to claim 1, wherein the first information comprises a demodulation reference signal (DMRS).

3. The method according to claim 2, wherein the first information further comprises at least one of:

   partial data information;
   partial transport block (TB) information; or
   a first reference signal, wherein the first reference signal is used to generate the sensing information.

4. The method according to claim 2, wherein the DMRS comprises a first DMRS, wherein the first DMRS is mapped to the first frequency-domain resource within the first time-domain unit for transmission, or the first DMRS is mapped to the second frequency-domain resource and a third frequency-domain resource within the first time-domain unit for transmission, wherein the third frequency-domain resource is a portion of the first frequency-domain resource that is not overlapped with the second frequency-domain resource.

5. The method according to claim 4, wherein a sequence corresponding to the first DMRS is generated based on a size of the first frequency-domain resource.

6. The method according to claim 4, wherein generating the sensing information based on the first information comprises:
   generating the sensing information based on the first DMRS.

7. The method according to claim 2, wherein the DMRS comprises a second DMRS, wherein the second DMRS is mapped to the second frequency-domain resource within the first time-domain unit for transmission.

8. The method according to claim 7, wherein a sequence corresponding to the second DMRS is generated based on a size of the second frequency-domain resource.

9. The method according to claim 3, wherein the first reference signal is mapped to a third frequency-domain resource within the first time-domain unit for transmission; and
wherein the first frequency-domain resource comprises the third frequency-domain resource, and the third frequency-domain resource is not overlapped with the second frequency-domain resource.

10. The method according to claim 9, wherein a sequence corresponding to the first reference signal is generated based on a size of the third frequency-domain resource.

11. The method according to any one of claims 3 to 10, wherein the DMRS comprises a second DMRS; and generating the sensing information based on the first information comprises:
generating the sensing information based on the second DMRS and the first reference signal.

12. The method according to claim 11, wherein the second DMRS comprises DMRSs corresponding to A ports, and the first reference signal comprises DMRSs corresponding to some of the A ports, wherein A is a positive integer.

13. The method according to claim 11, wherein

a frequency-domain spacing between physical resources occupied by the first reference signal is greater than a frequency-domain spacing between physical resources occupied by the second DMRS; or
a frequency-domain density of the first reference signal is less than a frequency-domain density of the second DMRS.

14. The method according to any one of claims 1 to 13, wherein the second information comprises at least one of:

data information;
partial data information;
transport block (TB) information; or
partial TB information.

15. The method according to any one of claims 1 to 14, wherein all or part of the data information is mapped to frequency-domain resources that are not occupied by a demodulation reference signal (DMRS) in the second frequency-domain resource within the first time-domain unit.

16. The method according to any one of claims 1 to 15, wherein all or part of the data information is mapped to frequency-domain resources that are not occupied by a reference signal in the first frequency-domain resource within the first time-domain unit.

17. The method according to any one of claims 1 to 16, wherein the first time-domain unit and/or the first frequency-domain resource is indicated by a network device.

18. The method according to claim 17, wherein configuration signaling for configuring the first frequency-domain resource comprises at least one of:

a frequency-domain resource start point of the first frequency-domain resource;
a quantity of frequency-domain resources of the first frequency-domain resource;
a frequency-domain resource end point of the first frequency-domain resource; or
a frequency-domain resource spacing of the first frequency-domain resource.

19. The method according to any one of claims 2 to 18, wherein the first time-domain unit is a first symbol occupied by the DMRS or first M symbols occupied by the DMRS, wherein M is a positive integer greater than 1.

20. The method according to any one of claims 1 to 19, wherein a first spreading factor corresponding to the first time-domain unit and a second spreading factor corresponding to the second time-domain unit are independently set; wherein the first spreading factor is configured to spread information transmitted within the first time-domain unit, and the second spreading factor is configured to spread information transmitted within the second time-domain unit.

21. The method according to claim 20, wherein the first spreading factor is greater than the second spreading factor.

22. The method according to any one of claims 1 to 21, wherein the second frequency-domain resource is configured by a network device.

23. The method according to any one of claims 1 to 22, wherein the sensing information is used to sense a target and/or an environment.

24. A sensing method, performed by a transmitter device, the method comprising:

transmitting first information on a first frequency-domain resource within a first time-domain unit and second information transmitted on a second frequency-domain resource within a second time-domain unit, wherein the first frequency-domain resource comprises the second frequency-domain resource; wherein the first information and the second information are used to acquire data information, and the first information is used to generate sensing information.

25. The method according to claim 24, wherein the first information comprises a demodulation reference signal (DMRS).

26. The method according to claim 25, wherein the first information further comprises at least one of:

partial data information; partial transport block (TB) information; or a first reference signal, wherein the first reference signal is used to generate the sensing information.

27. The method according to claim 25, wherein the DMRS comprises a first DMRS, wherein the first DMRS is mapped to the first frequency-domain resource within the first time-domain unit for transmission, or the first DMRS is mapped to the second frequency-domain resource and a third frequency-domain resource within the first time-domain unit for transmission, wherein the third frequency-domain resource is a portion of the first frequency-domain resource that is not overlapped with the second frequency-domain resource.

28. The method according to claim 27, wherein a sequence corresponding to the first DMRS is generated based on a size of the first frequency-domain resource.

29. The method according to claim 27, wherein the first DMRS is used to generate the sensing information.

30. The method according to claim 25, wherein the DMRS comprises a second DMRS, wherein the second DMRS is mapped to the second frequency-domain resource within the first time-domain unit for transmission.

31. The method according to claim 30, wherein a sequence corresponding to the second DMRS is generated based on a size of the second frequency-domain resource.

32. The method according to claim 26, wherein the first reference signal is mapped to a third frequency-domain resource within the first time-domain unit for transmission; and wherein the first frequency-domain resource comprises the third frequency-domain resource, and the third frequency-domain resource is not overlapped with the second frequency-domain resource.

33. The method according to claim 32, wherein a sequence corresponding to the first reference signal is generated based on a size of the third frequency-domain resource.

34. The method according to any one of claims 26 to 33, wherein the DMRS comprises a second DMRS, wherein the second DMRS and the first reference signal are used to generate the sensing information.

35. The method according to claim 34, wherein the second DMRS comprises DMRSs corresponding to A ports, and the first reference signal comprises DMRSs corresponding to some of the A ports, wherein A is a positive integer.

36. The method according to claim 34, wherein

a frequency-domain spacing between physical resources occupied by the first reference signal is greater than a frequency-domain spacing between physical resources occupied by the second DMRS; or,
a frequency-domain density of the first reference signal is less than a frequency-domain density of the second DMRS.

37. The method according to any one of claims 24 to 36, wherein the second information comprises at least one of:

data information;
partial data information;
transport block (TB) information; or
partial TB information.

38. The method according to any one of claims 24 to 37, wherein all or part of the data information is mapped to frequency-domain resources that are not occupied by a demodulation reference signal (DMRS) in the second frequency-domain resource within the first time-domain unit.

39. The method according to any one of claims 24 to 38, wherein all or part of the data information is mapped to frequency-domain resources that are not occupied by a reference signal in the first frequency-domain resource within the first time-domain unit.

40. The method according to any one of claims 24 to 39, wherein the first time-domain unit and the first frequency-domain resource are indicated by a network device.

41. The method according to claim 40, wherein configuration signaling for configuring the first frequency-domain resource comprises at least one of:

a frequency-domain resource start point of the first frequency-domain resource;
a quantity of frequency-domain resources of the first frequency-domain resource;
a frequency-domain resource end point of the first frequency-domain resource; or
a frequency-domain resource spacing of the first frequency-domain resource.

42. The method according to any one of claims 25 to 41, wherein the first time-domain unit is a first symbol occupied by the DMRS or first M symbols occupied by the DMRS, wherein M is a positive integer greater than 1.

43. The method according to any one of claims 24 to 42, wherein a first spreading factor corresponding to the first time-domain unit and a second spreading factor corresponding to the second time-domain unit are independently set; wherein the first spreading factor is configured to spread information transmitted within the first time-domain unit, and the second spreading factor is configured to spread information transmitted within the second time-domain unit.

44. The method according to claim 43, wherein the first spreading factor is greater than the second spreading factor.

45. The method according to any one of claims 24 to 44, wherein the second frequency-domain resource is configured by a network device.

46. The method according to any one of claims 24 to 45, wherein the sensing information is used to sense a target and/or an environment.

47. A method for transmitting a physical channel, comprising:

transmitting the physical channel via N time-domain units, wherein the N time-domain units comprise a first time-domain unit and a second time-domain unit;
wherein a first frequency-domain resource occupied by the physical channel within the first time-domain unit is greater than a second frequency-domain resource occupied by the physical channel within the second time-domain unit, and first information transmitted over the physical channel within the first time-domain unit is used for sensing.

48. A sensing apparatus, comprising:

a receiving module, configured to receive first information on a first frequency-domain resource within a first time-domain unit and second information transmitted on a second frequency-domain resource within a second time-domain unit, wherein the first frequency-domain resource comprises the second frequency-domain resource;
an acquiring module, configured to acquire data information based on the first information and the second information; and
a generating module, configured to generate sensing information based on the first information.

49. A sensing apparatus, comprising:

a transmitting module, configured to transmit first information on a first frequency-domain resource within a first time-domain unit and second information on a second frequency-domain resource within a second time-domain unit, wherein the first frequency-domain resource comprises the second frequency-domain resource;
wherein the first information and the second information are used to acquire data information, and the first information is used to generate sensing information.

50. An apparatus for transmitting a physical channel, comprising:

a transmitting module, configured to transmit the physical channel via N time-domain units, the N time-domain units comprising a first time-domain unit and a second time-domain unit;
wherein a first frequency-domain resource occupied by the physical channel within the first time-domain unit is greater than a second frequency-domain resource occupied by the physical channel within the second time-domain unit, and first information transmitted over the physical channel within the first time-domain unit is used for sensing.

51. A terminal device, comprising:

a processor;
a transceiver, connected to the processor; and
a memory, configured to store one or more executable instructions of the processor; and
wherein the terminal device is configured to load and execute the one or more executable instructions to perform the sensing method as defined in any one of claims 1 to 46, or the method for transmitting the physical channel as defined in claim 47.

52. A network device, comprising:

a processor;
a transceiver, connected to the processor; and
a memory, configured to store one or more executable instructions of the processor; and
wherein the network device is configured to load and execute the one or more executable instructions to perform the sensing method as defined in any one of claims 1 to 46, or the method for transmitting the physical channel as defined in claim 47.

53. A computer-readable storage medium, storing one or more executable instructions, wherein the one or more executable instructions, when loaded and executed by a processor, cause the processor to perform the sensing method as defined in any one of claims 1 to 46, or the method for transmitting the physical channel as defined in claim 47.

54. A chip, comprising: programmable logic circuitry or one or more programs, wherein the chip, when running, is configured to perform the sensing method as defined in any one of claims 1 to 46, or the method for transmitting the physical channel as defined in claim 47.

55. A computer program product, comprising: one or more computer instructions stored in a computer-readable storage medium, wherein the one or more computer instructions, when read by a processor of a computer device from the computer-readable storage medium and executed by the processor, cause the computer device to perform the sensing method as defined in any one of claims 1 to 46, or the method for transmitting the physical channel as defined in claim 47.

Time-domain symbol

Subcarrier

Configuration type 1
（a）

⊘ Ports 0, 1
☐ Ports 2, 3

Time-domain symbol

Subcarrier

Configuration type 1
（b）

⊘ Ports 0, 1, 4, 5
☐ Ports 2, 3, 6, 7

FIG. 1

Time-domain symbol

Subcarrier

Configuration type 2
（a）

⊘ Ports 0, 1
☐ Ports 2, 3
⊠ Ports 4, 5

Time-domain symbol

Subcarrier

Configuration type 2
（b）

⊘ Ports 0, 1, 6, 7
☐ Ports 2, 3, 8, 9
⊠ Ports 4, 5, 10, 11

FIG. 2

Bandwidth

301

302

PDSCH/PUSCH

Slot

FIG. 3

Communication system 400

Core network

30

20

Access network

10

Terminal device

FIG. 4

Receiving first information on a first frequency-domain resource within a first time-domain unit and second information on a second frequency-domain resource within a second time-domain unit

502

Acquiring data information based on the first information and the second information

504

Generating sensing information based on the first information

506

FIG. 5

Transmitting first information on a first frequency-domain resource within a first time-domain unit and second information on a second frequency-domain resource within a second time-domain unit

602

FIG. 6

| Receiver device | | | Transmitter device |

702, First information on a first frequency-domain resource within a first time-domain unit and second information on a second frequency-domain resource within a second time-domain unit, wherein the first information includes a first DMRS

704, Acquiring data information based on the first information and the second information

706, Generating sensing information based on the first DMRS

FIG. 7

801

Ports 0, 1

802

Bandwidth

PDSCH/PUSCH

Slot

FIG. 8

901

Ports 0, 1
Ports 2, 3

Bandwidth

903

902

PDSCH/PUSCH

Slot

FIG. 9

Receiver device

Transmitter device

1002, First information on a first frequency-domain resource within a first time-domain unit and second information on a second frequency-domain resource within a second time-domain unit, wherein the first information includes a second DMRS and a first reference signal

1004, Acquiring data information based on the first information and the second information

1006, Generating sensing information based on the second DMRS and the first reference signal

FIG. 10

FIG. 11

FIG. 12

FIG. 13

FIG. 14

Ports 0, 1

Ports 2, 3

1501

1505

1502

1504

PDSCH/PUSCH

Bandwidth

1503

Slot

FIG. 15

1602

Transmitting the physical channel within N time-domain units

FIG. 16

Receiving module ⌐1701

Acquiring module ⌐1702

Generating module ⌐1703

FIG. 17

Transmitting module ⌐1801

FIG. 18

Transmitting module ⌐1901

FIG. 19

Communication device 2000

Processor 2001

Transmitter 2003

2005

Bus

Receiver 2002

Memory 2004

FIG. 20

## INTERNATIONAL SEARCH REPORT

| International application No. |
|---|
| **PCT/CN2023/109631** |

**A.    CLASSIFICATION OF SUBJECT MATTER**

H04W24/08(2009.01)i

According to International Patent Classification (IPC) or to both national classification and IPC

**B.    FIELDS SEARCHED**

Minimum documentation searched (classification system followed by classification symbols)

IPC:  H04W

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; 3GPP: 感知, 时域, 频域, 资源, 子载波, 参考信号, 解调, 端口, 单元, 映射, 符号, sensing, time, frequency, domain, resource, sub-carrier, DMRS, reference signal, RE, symbol, port, PUSCH

**C.    DOCUMENTS CONSIDERED TO BE RELEVANT**

| Category* | Citation of document, with indication, where appropriate, of the relevant passages | Relevant to claim No. |
|---|---|---|
| X | CN 115118402 A (HUAWEI TECHNOLOGIES CO., LTD.) 27 September 2022 (2022-09-27) description, paragraphs [0072]-[0093] and [0142]-[0171] | 1-55 |
| X | CN 115835383 A (ZTE CORP.) 21 March 2023 (2023-03-21) description, paragraphs [0041]-[0076] and [0133]-[0186] | 1-55 |
| A | CN 110891312 A (HUAWEI TECHNOLOGIES CO., LTD.) 17 March 2020 (2020-03-17) entire document | 1-55 |
| A | EP 2472981 A1 (MIMOON GMBH) 04 July 2012 (2012-07-04) entire document | 1-55 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 March 2024** | **29 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/109631**

| Patent document cited in search report | | | Publication date (day/month/year) | Patent family member(s) | | | Publication date (day/month/year) |
|---|---|---|---|---|---|---|---|
| CN | 115118402 | A | 27 September 2022 | WO | 2022194263 | A1 | 22 September 2022 |
| CN | 115835383 | A | 21 March 2023 | WO | 2023040780 | A1 | 23 March 2023 |
| CN | 110891312 | A | 17 March 2020 | WO | 2020052514 | A1 | 19 March 2020 |
| | | | | CN | 110891312 | B | 03 November 2023 |
| EP | 2472981 | A1 | 04 July 2012 | EP | 2472981 | B1 | 25 March 2015 |

Form PCT/ISA/210 (patent family annex) (July 2022)